# EUROPEAN PATENT APPLICATION

(11) **EP 2 554 615 A1**
(43) Date of publication of application: **06.02.2013**
(21) Application number: 12179150.3
(22) Date of filing: 03.08.2012
(51) Int. Cl.: C09J 7/02, C09J 133/06

(54) **Pressure-sensitive adhesive compositions, pressure-sensitive adhesive layers, and pressure-sensitive adhesive sheets**

(30) Priority: 05.08.2011 JP 2011172103; 05.08.2011 JP 2011172105; 20.04.2012 JP 2012096683
(71) Applicant: NITTO DENKO CORPORATION, Ibaraki-shi, Osaka 567-8680 (JP)
(72) Inventor: Kataoka, Kenichi, Ibaraki-shi, Osaka 567-8680 (JP); Ukei, Natsuki, Ibaraki-shi, Osaka 567-8680 (JP); Amano, Tatsumi, Ibaraki-shi, Osaka 567-8680 (JP); Sawazaki, Ryohei, Ibaraki-shi, Osaka 567-8680 (JP); Mitzui, Kazuma, Ibaraki-shi, Osaka 567-8680 (JP)
(74) Representative: TBK

(57) **Abstract**

The present invention provides a pressure-sensitive adhesive composition which is excellent in removability, peel adhesive power temporal stability and staining properties; a pressure-sensitive adhesive layer produced with the same; and a pressure-sensitive adhesive sheet. The present invention also provides a pressure-sensitive adhesive composition which can prevent electrification of a non-antistatic protected adherend when peeled off using an ionic compound which is an antistatic agent, and is less likely to cause lifting and is also excellent in removability; a pressure-sensitive adhesive layer produced with the same; and a pressure-sensitive adhesive sheet.A pressure-sensitive composition comprising a (meth)acryl-based polymer containing, as a main component, a (meth)acryl-based monomer having an alkyl group of 1 to 14 carbon atoms and an organopolysiloxane having a oxyalkylene chain, wherein the organopolysiloxane is represented by the following formula: 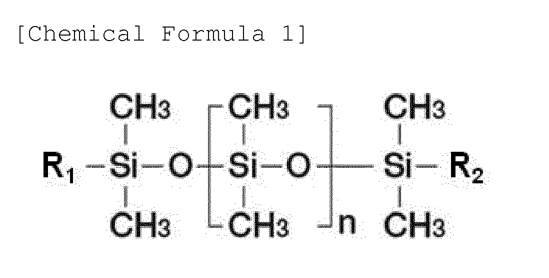 wherein R₁ and/or R₂ have/has an oxyalkylene chain of 1 to 6 carbon atoms, an alkylene group in the oxyalkylene chain may be a straight or branched chain and the oxyalkylene chain may have an alkoxy group or a hydroxyl group at the end, and any one of R₁ or R₂ may be a hydroxyl group or an alkyl group or an alkoxy group, and a part of the alkyl group and alkoxy group may be a functional group substituted with a hetero atom; and n is an integer of 1 to 300.

## Description

### Technical Field

The present invention relates to pressure-sensitive adhesive compositions, pressure-sensitive adhesive layers, and pressure-sensitive adhesive sheets.

The pressure-sensitive adhesive sheet produced with the pressure-sensitive adhesive composition of the present invention is used in products which are peeled after use and required easy removal, and plastic products vulnerable to static electricity. In particular, the pressure-sensitive adhesive sheet is useful as a surface protecting film for protecting the surface of an optical member for use in a liquid crystal display, such as a polarizing plate, a wave plate, a retardation plate, an optical compensation film, a reflective sheet, or a brightness enhancement film.

### Description of the Related Art

In recent years, for transportation of optical or electronic components or mounting of optical or electronic components on printed boards, each component is often packed with a given sheet, or a pressure-sensitive adhesive tape is often bonded to each component, before transfer. In particular, surface protecting films are widely used in the field of optical or electronic components.

A surface protecting film is generally used for the purpose of preventing a scratch or a stain produced during processing or conveyance of a subject to be protected by bonding to the subject to be protected through a pressure-sensitive adhesive applied on a supporting film side. For example, a panel of a liquid crystal display is formed by bonding optical members such as a polarizing plate and a wave plate to a liquid crystal cell through a pressure-sensitive adhesive. These optical members are bonded through a pressure-sensitive adhesive, and thus a scratch or a stain produced during processing or conveyance of a subject to be protected is protected. The surface protecting film is peeled and removed when it became unnecessary.

Recently, with upsizing and thinning of a liquid crystal display, damage on a polarizing plate and a liquid crystal cell is likely to arise during a peeling step in a surface protecting film for a polarizing plate used in a liquid crystal display panel. Therefore, it is required to ensure easy removal during peeling at high speed while maintaining moderate adhesive power(adhesion) so as not to generate lifting during peeling at low speed.

In order to realize easy peelability, various techniques are applied to a pressure-sensitive adhesive composition for use in a surface protecting film. For example, there have been reported an example in which a polymer used in a pressure-sensitive adhesive composition is allowed to contain a component having a high glass transition temperature (Tg), a silicone-based monomer, a reactive surfactant and the like, and an example in which a pressure-sensitive adhesive composition is highly crosslinked (see Patent publication 1 and 2).

However, both of the above-mentioned methods may cause a phenomenon in which a surface protecting film partially lifts from a subject to be protected with the lapse of time or when subjected to a treatment under high temperature conditions. Therefore, it is required to ensure easy removal during peeling at high speed while maintaining moderate adhesive power so as not to generate lifting during peeling at low speed.

In general, surface protecting films and optical members are made of plastic materials and therefore are highly electrical insulating properties and can generate static electricity when they are rubbed or peeled off. Therefore, static electricity is generated even when a surface protecting film is peeled off from an optical member such as a polarizing plate, and if a voltage is applied to a liquid crystal cell in such a state that the generated static electricity still remains, the orientation of the liquid crystal molecule may be degraded, or defects may be produced in the panel.

The presence of static electricity can create a risk of adsorbing dust or dirt or a risk of reducing workability. To solve the problem, therefore, surface protecting films undergo various antistatic treatments.

To suppress such electrostatic build-up, there has been disclosed an antistatic method that includes adding a low-molecular-weight surfactant to a pressure-sensitive adhesive and transferring the surfactant from the pressure-sensitive adhesive to the object to be protected (see, for example, Patent publication 3). In this technique, however, the added low-molecular-weight surfactant easily bleeds out to the surface of the pressure-sensitive adhesive, and if this technique is applied to a surface protecting film, there may be a risk of staining the subject to be protected. Therefore, if a low-molecular-weight-surfactant-containing pressure-sensitive adhesive is applied to an optical member-protecting film, there may be a particular risk of degrading the optical properties of the optical member.

There is also disclosed a pressure-sensitive adhesive sheet having a pressure-sensitive adhesive layer containing an antistatic agent (see, for example, Patent publication 4). In this pressure-sensitive adhesive sheet, an antistatic agent including propylene glycol and an alkali metal salt is added to an acryl-based pressure-sensitive adhesive so that the antistatic agent can be prevented from bleeding out to the surface of the pressure-sensitive adhesive. Even when this pressure-sensitive adhesive sheet is used, however, the phenomenon of bleeding of the antistatic agent is inevitable, so that when the antistatic agent is actually applied to a surface protecting film and aged or subjected to high-temperature treatment, there is a risk of causing a phenomenon in which the surface protecting film is partially lifted up from the subject to be protected due to the bleeding phenomenon.

[Patent publication 1] JP-A-2005-023143
[Patent publication 2] JP-B1-2543545
[Patent publication 3] JP-A-09-165460
[Patent publication 4] JP-A-06-128539

### DISCLOSURE OF THE INVENTION

### Probleem to be solved by the invention

To solve the problems with conventional pressure-sensitive adhesive sheets (surface protecting films), an object of the present invention is to provide a pressure-sensitive adhesive composition which exhibits reduced staining properties to the adherend and low adhesive power during high-speed peeling while maintaining moderate adhesive power so as not to cause generation of lifting during low-speed peeling, and is excellent in removability; and to provide a pressure-sensitive adhesive composition which can prevent electrification of a non-antistatic protected adherend during peeling, and a pressure-sensitive adhesive layer produced with such a pressure-sensitive adhesive composition, and a pressure-sensitive adhesive sheet.

That is, the pressure-sensitive adhesive composition of the present invention is characterized by including a (meth)acryl-based polymer containing, as a main component, a (meth)acryl-based monomer having an alkyl group of 1 to 14 carbon atoms and an organopolysiloxane having a oxyalkylene chain, wherein the organopolysiloxane is represented by the formula shown below. The use of the pressure-sensitive adhesive composition of the present invention makes it possible to provide a pressure-sensitive adhesive composition which has reduced staining properties to the adherend (subject to be protected) and excellent removability during peeling. It is also considered that balanced compatibility with the (meth)acryl-based polymer makes it possible to reduce bleeding phenomenon-induced staining. It is also considered that the organopolysiloxane reduces the surface free energy of the pressure-sensitive adhesive surface to enable easy removal.

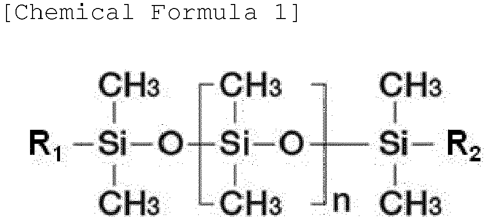

wherein R₁ and/or R₂ have/has an oxyalkylene chain of 1 to 6 carbon atoms, an alkylene group in the oxyalkylene chain may be a straight or branched chain and the oxyalkylene chain may have an alkoxy group or a hydroxyl group at the end, and any one of R₁ or R₂ may be a hydroxyl group or an alkyl group or an alkoxy group, and a part of the alkyl group and alkoxy group may be a functional group substituted with a hetero atom; and n is an integer of 1 to 300.

Also, the pressure-sensitive adhesive composition of the present invention includes a (meth)acryl-based polymer containing, as a main component, a (meth)acryl-based monomer having an alkyl group of 1 to 14 carbon atoms, an ionic compound and an organopolysiloxane having an oxyalkylene chain, wherein the organopolysiloxane is preferably represented by the formula shown below. The use of the pressure-sensitive adhesive composition of the present invention makes it possible to prevent electrification of a non-antistatic protected adherend (subject to be protected) during peeling, to reduce the risk of staining the adherend, and to provide a pressure-sensitive adhesive composition which has reduced staining properties to the adherend and excellent removability. It is considered that the simultaneous use of an ionic compound and an organopolysiloxane having a oxyalkylene chain makes it possible to increase ionic conduction efficiency so that electrification properties can be imparted to the subject to be protected. It is also considered that balanced compatibility with the (meth)acryl-based polymer makes it possible to reduce bleeding phenomenon-induced staining. It is also considered that the organopolysiloxane reduces the surface free energy of the pressure-sensitive adhesive surface to enable easy removal.

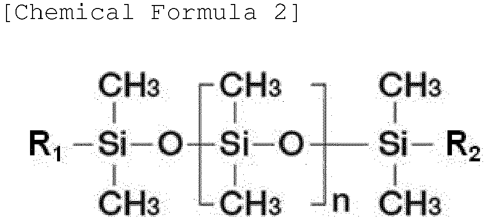

wherein R₁ and/or R₂ have/has an oxyalkylene chain of 1 to 6 carbon atoms, an alkylene group in the oxyalkylene chain may be a straight or branched chain and the oxyalkylene chain may have an alkoxy group or a hydroxyl group at the end, and any one of R₁ or R₂ may be a hydroxyl group or an alkyl group or an alkoxy group, and a part of the alkyl group and alkoxy group may be a functional group substituted with a hetero atom; and n is an integer of 1 to 300.

Furthermore, the pressure-sensitive adhesive composition of the present invention includes a (meth)acryl-based polymer containing, as a main component, a (meth)acryl-based monomer having an alkyl group of 1 to 14 carbon atoms, an ionic compound, an isocyanate compound having an aromatic ring and an organopolysiloxane having an oxyalkylene chain, wherein the organopolysiloxane is preferably represented by the formula shown below. The use of the pressure-sensitive adhesive composition of the present invention makes it possible to prevent electrification of a non-antistatic protected adherend (subject to be protected) during peeling, and to provide a pressure-sensitive adhesive composition which has reduced staining properties to the adherend and exhibits low adhesive power during high-speed peeling while maintaining moderate adhesive power during low-speed peeling, and also has excellent removability. It is considered that the simultaneous use of an ionic compound and an organopolysiloxane having a oxyalkylene chain makes it possible to increase ionic conduction efficiency so that electrification properties can be imparted to the subject to be protected. It is also considered that balanced compatibility with the (meth)acryl-based polymer makes it possible to reduce bleeding phenomenon-induced staining. It is also considered that the organopolysiloxane reduces the surface free energy of the pressure-sensitive adhesive surface to enable easy removal during high-speed peeling.

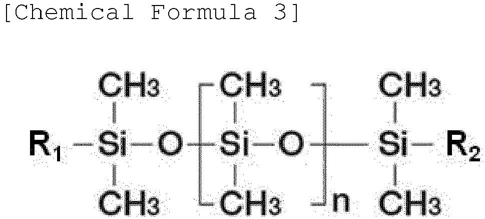

wherein R₁ and/or R₂ have/has an oxyalkylene chain of 1 to 6 carbon atoms, an alkylene group in the oxyalkylene chain may be a straight or branched chain and the oxyalkylene chain may have an alkoxy group or a hydroxyl group at the end, and any one of R₁ or R₂ may be a hydroxyl group or an alkyl group or an alkoxy group, and a part of the alkyl group and alkoxy group may be a functional group substituted with a hetero atom; and n is an integer of 1 to 300.

In the pressure-sensitive adhesive composition of the present invention, the ionic compound is preferably a lithium salt.

In the pressure-sensitive adhesive composition of the present invention, the ionic compound is preferably an ionic liquid.

In the pressure-sensitive adhesive composition of the present invention, the (meth)acryl-based polymer further contains, as a monomer component, a hydroxyl group-containing (meth)acryl-based monomer, preferably.

The pressure-sensitive adhesive composition of the present invention further contains a polyoxyalkylene chain-containing compound containing no organopolysiloxane, preferably.

The pressure-sensitive adhesive sheet of the present invention preferably includes supporting film, and a pressure-sensitive adhesive layer formed of the above pressure-sensitive adhesive composition on one side or both side of the supporting film.

The pressure-sensitive adhesive sheet of the present invention is preferably used for surface protection.

### BRIEF DESCRIPTION OF THE DRAWINGS

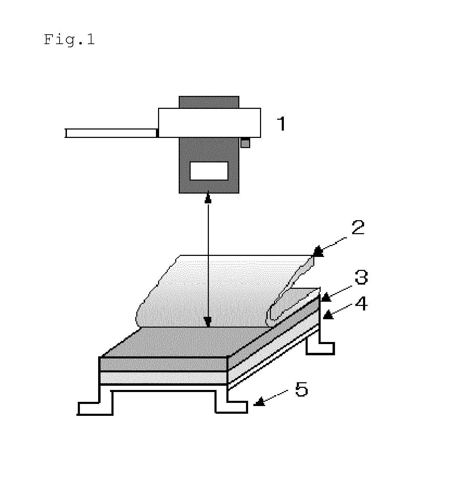

Fig. 1 is a schematic construction view of a potential measuring part used for measuring a peeling electrification voltage in Examples.

### DETAILED DESCRIPTION OF THE PREFERRED EMBODIMENTS

The embodiments of the present invention will be described in detail below.

The pressure-sensitive adhesive composition of the present invention is characterized by including a (meth)acryl-based polymer containing, as a main component, a (meth)acryl-based monomer having an alkyl group of 1 to 14 carbon atoms and an organopolysiloxane having a oxyalkylene chain, wherein the organopolysiloxane is represented by the formula shown below. The (meth)acryl-based polymer in the present invention refers to an acryl-based polymer and/or a methacryl-based polymer, and the (meth)acrylate refers to an acrylate and/or a methacrylate.

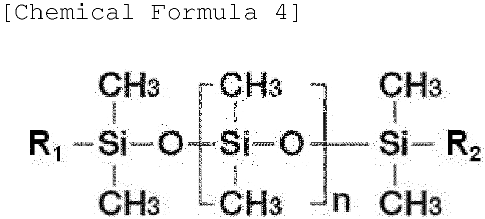

wherein R₁ and/or R₂ have/has an oxyalkylene chain of 1 to 6 carbon atoms, an alkylene group in the oxyalkylene chain may be a straight or branched chain and the oxyalkylene chain may have an alkoxy group or a hydroxyl group at the end, and any one of R₁ or R₂ may be a hydroxyl group or an alkyl group or an alkoxy group, and a part of the alkyl group and alkoxy group may be a functional group substituted with a hetero atom; and n is an integer of 1 to 300.

It is preferred that the pressure-sensitive adhesive composition of the present invention includes a (meth)acryl-based polymer containing, as a main component, a (meth)acryl-based monomer having an alkyl group of 1 to 14 carbon atoms, an ionic compound and an organopolysiloxane having an oxyalkylene chain, wherein the organopolysiloxane is represented by the formula shown below.

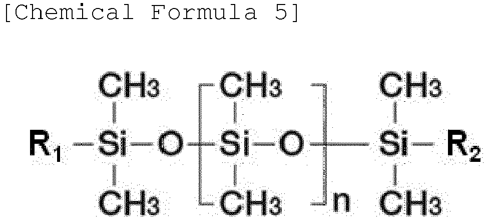

wherein R₁ and/or R₂ have/has an oxyalkylene chain of 1 to 6 carbon atoms, an alkylene group in the oxyalkylene chain may be a straight or branched chain and the oxyalkylene chain may have an alkoxy group or a hydroxyl group at the end, and any one of R₁ or R₂ may be a hydroxyl group or an alkyl group or an alkoxy group, and a part of the alkyl group and alkoxy group may be a functional group substituted with a hetero atom; and n is an integer of 1 to 300.

It is preferred that the pressure-sensitive adhesive composition of the present invention includes a (meth)acryl-based polymer containing, as a main component, a (meth)acryl-based monomer having an alkyl group of 1 to 14 carbon atoms, an ionic compound, an isocyanate compound having an aromatic ring and an organopolysiloxane having an oxyalkylene chain, wherein the organopolysiloxane is represented by the formula shown below.

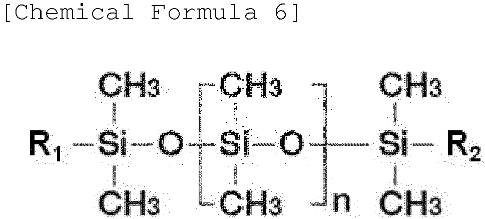

wherein R₁ and/or R₂ have/has an oxyalkylene chain of 1 to 6 carbon atoms, an alkylene group in the oxyalkylene chain may be a straight or branched chain and the oxyalkylene chain may have an alkoxy group or a hydroxyl group at the end, and any one of R₁ or R₂ may be a hydroxyl group or an alkyl group or an alkoxy group, and a part of the alkyl group and alkoxy group may be a functional group substituted with a hetero atom; and n is an integer of 1 to 300.

There is no particular limitation on the (meth)acryl-based polymer used in the present invention as long as it is a (meth)acryl-based polymer which contains the above (meth)acryl-based monomer and has adherability.

Since excellent adherability is obtained, a (meth)acrylate having an alkyl group of 1 to 14 carbon atoms, preferably a (meth)acrylate having an alkyl group of 6 to 14 carbon atoms, is used as a monomer component of a (meth)acryl-based polymer of the present invention. In case of using an ionic compound as an antistatic agent, use of the monomer component is a preferred aspect from the viewpoint of balanced compatibility with the ionic compound. One or more kinds of the (meth)acrylates can be used as a main component.

The (meth)acryl-based polymer including, as a main component, a (meth)acrylate having an alkyl group of 1 to 14 carbon atoms is preferably a (meth)acryl-based polymer including, as a monomer component, 50 to 99.9% by weight of a (meth)acrylate having an alkyl group of 1 to 14 carbon atoms, more preferably a (meth)acryl-based polymer including, as a monomer component, 60 to 95% by weight of a (meth)acrylate having an alkyl group of 1 to 14 carbon atoms. Keeping the content of the monomer component within the range is preferred in term of imparting moderate wettability and cohesive strength to the pressure-sensitive adhesive composition.

In the present invention, specific examples of the (meth)acrylate having an alkyl group of 1 to 14 carbon atoms include methyl (meth)acrylate, ethyl (meth)acrylate, n-butyl (meth)acrylate, s-butyl (meth)acrylate, t-butyl (meth)acrylate, isobutyl (meth)acrylate, hexyl (meth)acrylate, 2-ethylhexyl (meth)acrylate, n-octyl (meth)acrylate, isooctyl (meth)acrylate, n-nonyl (meth)acrylate, isononyl (meth)acrylate, n-decyl (meth)acrylate, isodecyl (meth)acrylate, n-dodecyl (meth)acrylate, n-tridecyl (meth)acrylate, n-tetradecyl (meth)acrylate and the like.

Particularly when the pressure-sensitive adhesive sheet of the present invention is for use as a surface protecting film, preferred examples include (meth)acrylates having an alkyl group of 6 to 14 carbon atoms, such as hexyl (meth)acrylate, 2-ethylhexyl (meth)acrylate, n-octyl (meth)acrylate, isooctyl (meth)acrylate, n-nonyl (meth)acrylate, isononyl (meth)acrylate, n-decyl (meth)acrylate, isodecyl (meth)acrylate, n-dodecyl (meth)acrylate, n-tridecyl (meth)acrylate, n-tetradecyl (meth)acrylate and the llike. The use of a (meth)acrylate having an alkyl group of 6 to 14 carbon atoms makes it easy to control the adhesive power to the adherend at a low level, so that excellent removability is achieved.

As for other polymerizable monomer components, polymerizable monomers for controlling the glass transition temperature (Tg) or peeling properties of the (meth)acryl-based polymer so that the Tg can be 0°C or lower (generally -100°C or higher) may be used in terms of easy balancing of adhesive perfrmance, as long as the effects of the present invention are not reduced.

For example, other polymerizable monomers except for (meth)acrylate monomers having a carboxyl group, a sulfonate group, a phosphate group, or an acid anhydride group may be used without restriction to form the (meth)acryl-based polymer. In particular, (meth)acrylates having a hydroxyl group (hydroxyl group-containing (meth)acryl-based monomers) are preferably used, because crosslinking can be easily controlled with them.

The use of the (meth)acryl-based monomer having a hydroxyl group makes it possible to easily control crosslinking of the pressure-sensitive adhesive composition, so that the balance between an improvement in wettability based on fluidity and a reduction in adhering strength for peeling can be easily controlled. In addition, the hydroxyl group has moderate interaction with the ionic compound which can be used as an antistatic agent and the organopolysiloxane having an oxyalkylene chain, in contrast to the carboxyl group or sulfonate group usually capable of acting as a crosslinking site, and therefore is preferably used in view of antistatic performance. Examples of the hydroxyl group-containing monomer include 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, (4-hydroxymethylcyclohexyl) methylacrylate, N-methylol (meth)acrylamide, vinyl alcohol, allyl alcohol, 2-hydroxyethyl vinyl ether, 4-hydroxybutyl vinyl ether, diethylene glycol monovinyl ether and the like.

In case of containing the hydroxyl group-containing (meth)acryl-based monomer, the amount of the hydroxyl group-containing (meth)acryl-based monomer component is preferably from 0.1 to 10 parts by weight, more preferably from 0.5 to 8 parts by weight, and most preferably from 1 to 5 parts by weight, based on 100 parts by weight of all structural units of the (meth)acryl-based polymer (all monomer components). The above range is preferred because the balance between the wettability and the cohesive strength of the pressure-sensitive adhesive composition is easily controlled within the range.

It is possible to appropriately use, as other polymerizable monomers that may be used in addition to the above monomers to form the (meth)acryl-based polymer, cohesive strength/heat resistance improving components such as cyano group-containing monomers, vinyl ester monomers, and aromatic vinyl monomers; and components having a functional group capable of improving adhesive strength or serving as a crosslinking base point, such as amide group-containing monomers, imide group-containing monomers, amino group-containing monomers, epoxy group-containing monomers, N-acryloylmorpholine, and vinyl ether monomers. These monomer compounds may be used alone or in a mixture of two or more kinds.

Examples of the cyano group-containing monomer include acrylonitrile and methacrylonitrile.

Examples of vinylesters include vinyl acetate, vinyl propionate, and vinyl laurate.

Examples of the aromatic vinyl compound include styrene, chlorostyrene, chloromethylstyrene, α-methylstyrene, and other substituted styrene.

Examples of the amido group-containing monomer include acrylamide, methacrylamide, diethylacrylamide, N-vinylpyrrolidone, N, N-dimethylacrylamide, N, N-dimethylmethacrylamide, N, N-diethylacrylamide, N, N-diethylmethacrylamide, N, N'-methylenebisacrylamide, N, N-dimethylaminopropylacrylamide, N, N-dimethylaminopropylmethacrylamide, and diacetoneacrylamide.

Examples of the imido group-containing monomer include cyclohexylmaleimide, isopropylmaleimide, N-cyclohexylmaleimide, and itaconeimide.

Examples of the amino group-containing monomer include aminoethyl (meth)acrylate, N, N-dimethylaminoethyl (meth)acrylate, and N, N-dimethylaminopropyl (meth)acrylate.

Examples of the epoxy group-containing monomer include glycidyl (meth)acrylate, methylglycidyl (meth)acrylate, and allyl glycidyl ether.

Examples of vinyl ethers include methyl vinyl ether, ethyl vinyl ether, and isobutyl vinyl ether.

In the present invention, the other polymerizable monomers other than hydroxyl group-containing (meth)acryl-based monomers may be used alone or may be used in the form of a mixture of two or more thereof. The content of the monomer(s) is preferably from 0 to 40 parts by weight, more preferably from 0 to 35 parts by weight, still more preferably from 0 to 30 parts by weight based on the total amount of all structural units (all monomer components) of the (meth)acryl-based polymer. The use of other polymerizable monomers within the ranges allows appropriate control of the satisfactory removability and satisfactory interaction with an ionic compound in case of using an ionic compound.

In the pressure-sensitive adhesive composition of the present invention, the (meth)acryl-based polymer preferably further contains an alkylene oxide group-containing reactive monomer component with an average addition mole number of oxyalkylene units of 3 to 40.

The average addition mole number of oxyalkylene units in the alkylene oxide group-containing reactive monomer is preferably from 3 to 40, more preferably from 4 to 35, and particularly preferably from 5 to 30. When the average addition mole number is 3 or more, the effect of reducing staining of the subject to be protected tends to be produced efficiently. An average addition mole number of more than 40 is not preferred, because such a mole number may create a tendency to increase viscosity of the pressure-sensitive adhesive composition and become difficult to apply. When an ionic compound is used as the pressure-sensitive adhesive composition of the present invention, it is suitable that the mole number is within the above range in view of the compatibility with and the interaction of the ionic compound. The end of the oxyalkylene chain may remain a hydroxyl group, or may be substituted with any other functional group.

A single alkylene oxide group-containing reactive monomer may be used, or a mixture of two or more alkylene oxide group-containing reactive monomers may be used. The total content of the alkylene oxide group-containing reactive monomer component(s) is preferably 10% by weight or less, more preferably 5.0% by weight or less, still more preferably 4.0% by weight or less, particularly preferably 3.0% by weight or less, and even more preferably 1.0% by weight or less, based on the total amount of all structural units (all monomer components) of the (meth)acryl-based polymer. If the content of the alkylene oxide group-containing reactive monomer is 10% by weight or less, it is possible to appropriately adjust to satisfactory removability. If the content of the alkylene oxide group-containing reactive monomer is more than 10% by weight, the interaction with the ionic compound may increase to interfere with ionic conduction, so that the antistatic performance may be undesirably reduced in case of using an ionic compound.

In the present invention, the oxyalkylene unit of the alkylene oxide group-containing reactive monomer may be one having an alkylene group of 1 to 6 carbon atoms, such as an oxymethylene group, an oxyethylene group, an oxypropylene group, or an oxybutylene group. The hydrocarbon group of the oxyalkylene chain may be a straight or branched chain

The alkylene oxide group-containing reactive monomer is more preferably an ethylene oxide group-containing reactive monomer. When the (meth)acryl-based polymer used as a base polymer has an ethylene oxide group-containing reactive monomer, the base polymer can have satisfactory removability and improved compatibility with the ionic compound, so that the resulting pressure-sensitive adhesive composition is well inhibited from causing bleeding to the adherend and less staining.

In the present invention, the alkylene oxide group-containing reactive monomer is typically an alkylene oxide adduct of (meth)acrylic acid or a reactive surfactant having a reactive substituent such as an acryloyl group, a methacryloyl group, or an allyl group in the molecule.

Specific examples of the (meth)acrylic acid alkylene oxide adduct include polyethylene glycol (meth)acrylate, polypropylene glycol (meth)acrylate, polyethylene glycol-polypropylene glycol (meth)acrylate, polyethylene glycol-polybutylene glycol (meth)acrylate, polypropylene glycol-polybutylene glycol (meth)acrylate, methoxypolyethylene glycol (meth)acrylate, ethoxypolyethylene glycol (meth)acrylate, butoxypolyethylene glycol (meth)acrylate, octoxypolyethylene glycol (meth)acrylate, lauroxy polyethylene glycol (meth)acrylate, stearoxypolyethylene glycol (meth)acrylate, phenoxypolyethylene glycol (meth)acrylate, methoxypolypropylene glycol (meth)acrylate, octoxypolyethylene glycol-polypropylene glycol (meth)acrylate and the like. The end of the oxyalkylene chain may remain a hydroxyl group, or may be substituted with other functional groups such as an alkoxy group.

Specific examples thereof include, for example, an anion type reactive surfactant, a nonion type reactive surfactant, and a cation type reactive surfactant, having a (meth)acryloyl group, or an allyl group.

The anion type reactive surfactants, represented by the formulas (A1) to (A10), are cited as examples.

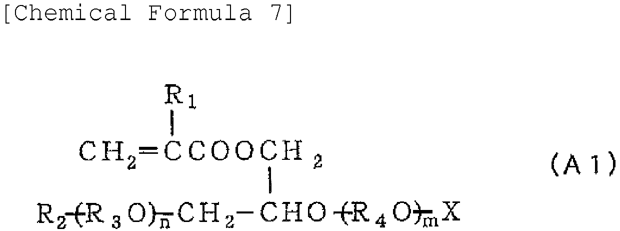

In the formula (A1), R₁ represents hydrogen or a methyl group, R₂ represents a hydrocarbon or acyl group of 1 to 30 carbon atoms, X represents an anionic hydrophilic group, R₃ and R₄ are the same or different and represent an alkylene group of 1 to 6 carbon atoms, and m and n represent an average addition mole number of 0 to 40, provided that (m + n) is a numeral of 3 to 40.

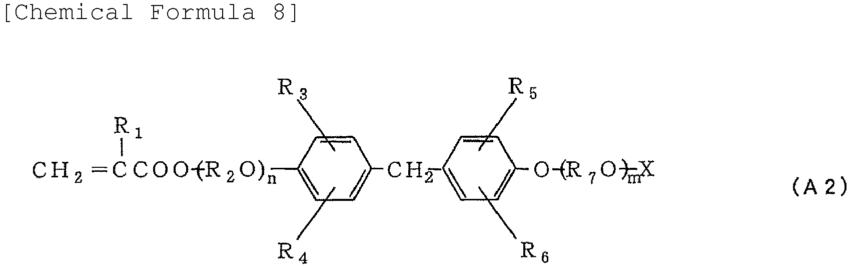

In the formula (A2), R₁ represents hydrogen or a methyl group, R₂ and R₇ are the same or different and represent an alkylene group of 1 to 6 carbon atoms, R₃ and R₅ are the same or different and represent hydrogen or an alkyl group, R₄ and R₆ are the same or different and represent hydrogen, an alkyl group, a benzyl group or a styrene group, X represents an anionic hydrophilic group, and m and n represent an average addition mole number of 0 to 40, provided that (m + n) is a numeral of 3 to 40.

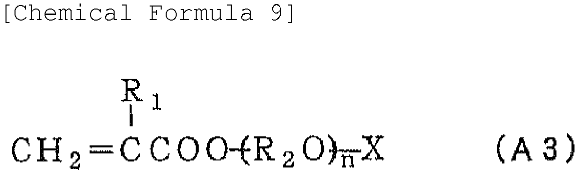

In the formula (A3), R₁ represents hydrogen or a methyl group, R₂ represents an alkylene group of 1 to 6 carbon atoms, X represents an anionic hydrophilic group, and n represents an average addition mole number of 3 to 40.

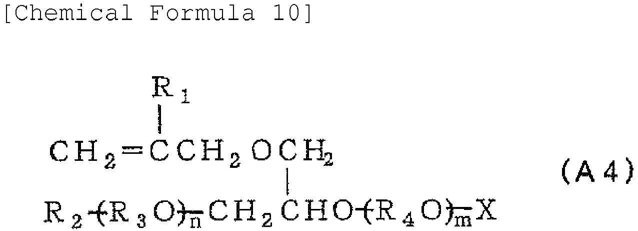

In the formula (A4), R₁ represents hydrogen or a methyl group, R₂ represents a hydrocarbon group of 1 to 30 carbon atoms or an acryl group, R₃ and R₄ are the same or different and represent an alkylene group of 1 to 6 carbon atoms, X represents an anionic hydrophilic group, m and n represent an average addition molar number of 0 to 40, provided that (m + n) is a numeral of 3 to 40.

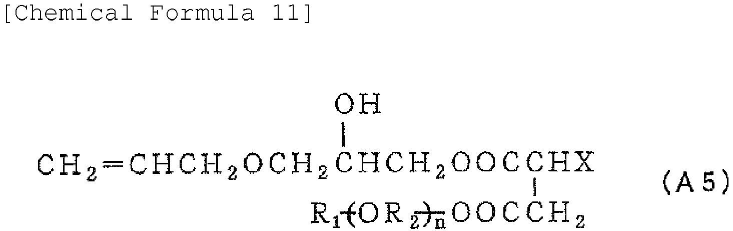

In the formula (A5), R₁ represents a hydrocarbon group, an amino group or a carboxylic acid residue, R₂ represents an alkylene group of 1 to 6 carbon atoms, X represents an anionic hydrophilic group, and n represents an average addition mole number of 3 to 40.

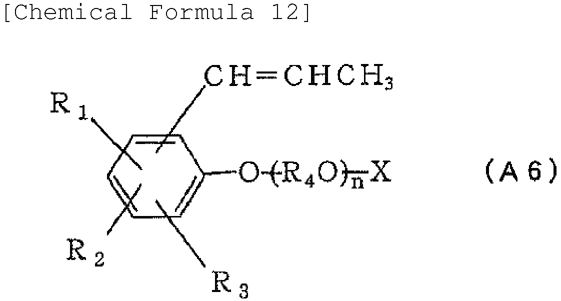

In the formula (A6), R₁ represents a hydrocarbon group of 1 to 30 carbon atoms, R₂ represents hydrogen or a hydrocarbon group of 1 to 30 carbon atoms, R₃ represents hydrogen or a propenyl group, R₄ represents an alkylene group of 1 to 6 carbon atoms, X represents an anionic hydrophilic group, and n represents an average addition mole number of 3 to 40.

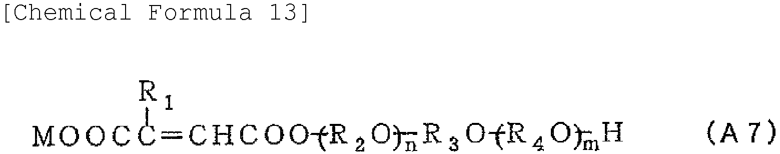

In the formula (A7), R₁ represents hydrogen or a methyl group, R₂ and R₄ are the same or different and represent an alkylene group of 1 to 6 carbon atoms, R₃ represents a hydrocarbon group of 1 to 30 carbon atoms, M represents hydrogen, an alkali metal, an ammonium group or an alkanolammonium group, and m and n represent an average addition mole number of 0 to 40, provided that (m + n) is a numeral of 3 to 40.

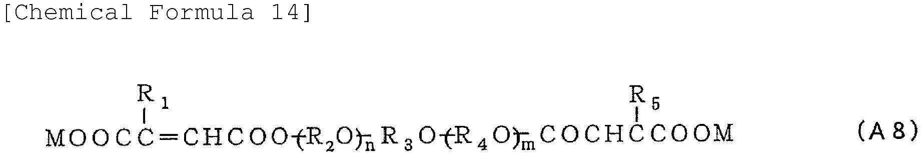

In the formula (A8), R₁ and R₅ are the same or different and represent hydrogen or a methyl group, R₂ and R₄ are the same or different and represent an alkylene group of 1 to 6 carbon atoms, R₃ represents a hydrocarbon group of 1 to 30 carbon atoms, M represents hydrogen, an alkali metal, an ammonium group or an alkanolammonium group, and m and n represent an average addition mole number of 0 to 40, provided that (m + n) is a numeral of 3 to 40.

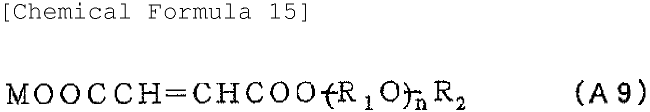

In the formula (A9), R₁ represents an alkylene group of 1 to 6 carbon atoms, R₂ represents a hydrocarbon group of 1 to 30 carbon atoms, M represents hydrogen, an alkali metal, an ammonium group or an alkanolammonium group, and n represents an average addition mole number of 3 to 40.

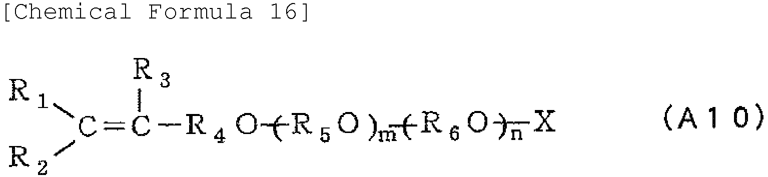

In the formula (A10), R₁, R₂ and R₃ are the same or different and represent hydrogen or a methyl group, R₄ represents a hydrocarbon group of 0 to 30 carbon atoms (which represents that R₄ is absent in case of zero carbon atom), R₅ and R₆ are the same or different and represent an alkylene group of 1 to 6 carbon atoms, X represents an anionic hydrophilic group, and m and n represent an average addition mole number of 0 to 40, provided that (m + n) is a numeral of 3 to 40.

In the formulas (A1) to (A6) and (A10), X represents an anionic hydrophilic group. Examples of the anionic hydrophilic group include those represented by the following formulas (a1) to (a2).

[Chemical Formula 17] —SO₃M₁ (a1)

In the formula (a1), M₁ represents hydrogen, an alkali metal, an ammonium group or alkanolammonium group.

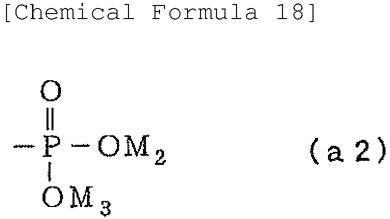

In the formula (a2), M₂ and M₃ are the same or different and represent hydrogen, an alkali group, an ammonium group or an alkanolammonium group.

Examples of the nonionic reactive surfactant include those represented by the formulas (N1) to (N6).

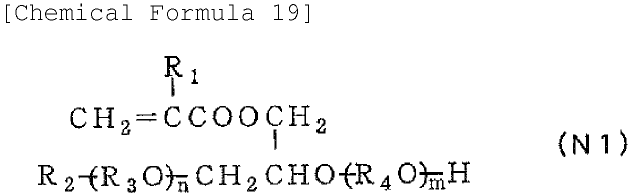

In the formula (N1), R₁ represents hydrogen or a methyl group, R₂ represents a hydrocarbon group of 1 to 30 carbon atoms or an acyl group, R₃ and R₄ are the same or different and represent an alkylene group of 1 to 6 carbon atoms, and m and n represent an average addition mole number of 0 to 40, provided that (m + n) is a numeral of 3 to 40.

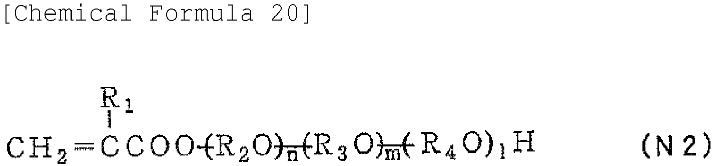

In the formula (N2), R₁ represents hydrogen or a methyl group, R₂, R₃ and R₄ are the same or different and represent an alkylene group of 1 to 6 carbon atoms, and n, m and 1 represent an average addition mole number of 0 to 40, provided that (n + m + 1) is a numeral of 3 to 40.

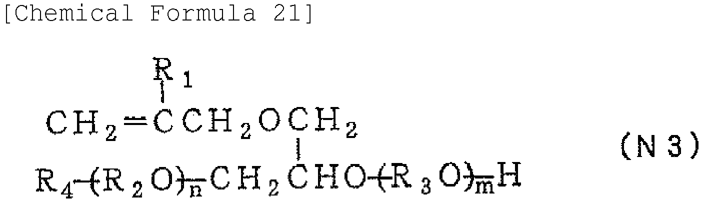

In the formula (N3), R₁ represents hydrogen or a methyl group, R₂ and R₃ are the same or different and represent an alkylene group of 1 to 6 carbon atoms, R₄ represents a hydrocarbon group of 1 to 30 carbon atoms, or an acyl group, and m and n represent an average addition mole number of 0 to 40, provided that (m + n) is a numeral of 3 to 40.

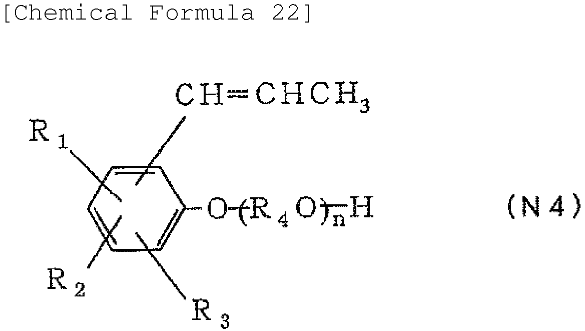

In the formula (N4) , R₁ and R₂ are the same or different and represent a hydrocarbon group of 1 to 30 carbon atoms, R₃ represents hydrogen or a propenyl group, R₄ represents a alkylene group of 1 to 6 carbon atoms, and n represents an average addition mole number of 3 to 40.

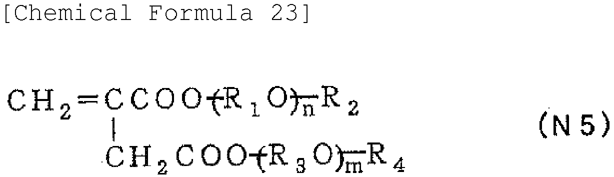

In the formula (N5), R₁ and R₃ are the same or different and represent an alkylene group of 1 to 6 carbon atoms, R₂ and R₄ are the same or different and represent hydrogen, a hydrocarbon group of 1 to 30 carbon atoms, or an acyl group, and m and n represent an average addition mole number of 0 to 40, provided that (m + n) is a numeral of 3 to 40.

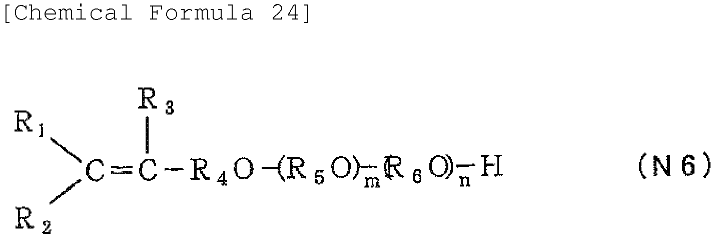

In the formula (N6), R₁, R₂ and R₃ are the same or different and represent hydrogen or a methyl group, R₄ represents a hydrocarbon group of 0 to 30 carbon atoms (which represents that R₄ is absent in case of zero carbon atom), R₅ and R₆ are the same or different and represent an alkylene group of 1 to 6 carbon atoms, and m and n represent an average addition mole number of 0 to 40, provided that (m + n) is a numeral of 3 to 40.

Examples of commercially available alkylene oxide group-containing reactive monomers include Blemmer PME-400, Blemmer PME-1000 and Blemmer 50POEP-800B (each manufactured by Nippon Oil & Fats Co., Ltd.); Latemul PD-420 and Latemul PD-430 (each manufactured by Kao Corporation); and Adekariasoap ER-10 and Adekariasoap NE-10 (each manufactured by ADEKA Corporation).

In case of using, as the monomer component (structural unit) composing the (meth)acryl-based polymer, monomer components having an acid functional group, such as a carboxyl group-containing monomer, an acid anhydride group-containing monomer and a phosphoric acid group-containing monomer, an acid value of the (meth)acryl-based polymer is preferably adjusted to 40 or less, more preferably 29 or less, still more preferably 16 or less, particularly preferably 8 or less, and most preferably 1 or less. In case of a (meth)acryl-based polymer having an acid value of more than 40, adhesive power to the subject to be protected may increase, and thus failing to obtain antistatic properties. These phenomena are considered to occur because the adhesive power to the subject to be protected is high due to the presence of a large number of carboxyl groups, which have a high polar effect, in the skeleton of the (meth)acryl-based polymer and because the ionic compound interacts with the carboxyl groups to interfere with ionic conduction and to reduce electrical conduction efficiency when the ionic compound is used as an antistatic agent.

The acid value can be adjusted by the amount of a monomer component having an acid functional group, and examples of the (meth)acryl-based polymer having a carboxyl group include a (meth)acryl-based polymer obtained by copolymerizing 2-ethylhexylacrylate with acrylic acid. In this case, the acid value can be adjusted to 40 or less by adjusting the amount of acrylic acid to 5.1 parts by weight or less based on 100 parts by weight of the total amount of 2-ethylhexylacrylate and acrylic acid.

In the present invention, the acid value of the (meth)acryl-based polymer refers to the mg amount of potassium hydroxide required to neutralize the free fatty acids, resin acids, and other acids contained in 1 g of a sample.

The aforementioned (meth)acryl-based polymer used in the present invention has a weight average molecular weight of preferably 100,000 to 5,000,000, more preferably 200,000 to 4,000,000, further preferably 300,000 to 3,000,000. When a weight average molecular weight is less than 100,000, there is a tendency that paste (adhesive residue) remaining is generated due to reduction in a cohesive strength of a pressure-sensitive adhesive composition. On the other hand, when a weight average molecular weight exceeds 5,000,000, there is a tendency that fluidity of a polymer is reduced, wetting on a polarizing plate becomes insufficient, and there is a tendency that this is a cause for peeling off which is generated between a polarizing plate and a pressure-sensitive adhesive composition layer of a pressure-sensitive adhesive sheet. A weight average molecular weight is obtained by measurement with GPC (gel permeation chromatography).

The glass transition temperature (Tg) of the (meth)acryl-based polymer is preferably 0°C or lower, more preferably -10°C or lower, still more preferably -41°C or lower, particularly preferably -51°C or lower, and most preferably -61°C or lower (usually -100°C or higher). If the glass transition temperature is higher than 0°C, a polymer does not easily flow and wettability on a polarizing plate becomes insufficient, and thus causing blister generated between a polarizing plate and a pressure-sensitive adhesive composition layer of a pressure-sensitive adhesive sheet. In particular, when the glass transition temperature is adjusted to -61°C or lower, it becomes easy to obtain a pressure-sensitive adhesive composition which is excellent in wettability to a polarizing plate, and easy peelability. The glass transition temperature of the (meth)acryl-based polymer can be adjusted within the above range by appropriately varying the monomer component to be used and the composition ratio.

The production of the (meth)acryl-based polymer is not particularly limited, but for example , a known polymerization method including solution polymerization, emulsion polymerization, bulk polymerization, and suspension polymerization. The solution polymerization is more preferred in view of the workability and specific aspects such as low staining to the subject to be protected. The resultant polymer may be any one selected from a random copolymer, a block copolymer, an alternate copolymer, a graft copolymer and others.

The pressure-sensitive adhesive composition of the present invention preferably contains the above (meth)acrylic-based polymer, ionic compound and organopolysiloxane having an oxyalkylene chain. It is more preferred to contain, as the ionic compound, an alkali metal salt and/or an ionic liquid. The ionic compound can impart excellent antistatic properties.

It is preferred that the alkali metal salt exhibits excellent antistatic properties even in case of adding a trace amount because of its high ionic dissociation. It is possible to suitably use, as the alkali metal salt, for example, a metal salt composed of cations of Li⁺, Na⁺ and K⁺, and anions of Cl⁻, Br⁻, I⁻, AlCl₄⁻, Al₂Cl₇⁻ , BF₄⁻ , PF₆⁻, SCN⁻, ClO₄⁻, NO₃⁻, CH₃COO⁻, C₉H₁₉COO⁻, CF₃COO⁻, C₃F₇COO⁻, CH₃SO₃⁻ , CF₃SO₃⁻ **,** C₄F9SO3⁻, C₂H₅OSO₃⁻**,** C₆H₁₃OSO₃⁻**,** C₈H₁₇OSO₃⁻, (CF₃SO₂)₂N⁻, (C₂F₅SO₂)₂N⁻, (C₃F₇SO₂)₂N⁻, (C₄F₉SO₂)₂N⁻, (CF₃SO₂)₃C⁻, AsF₆⁻, SbF₆⁻, NbF₆⁻, TaF₆⁻, F(HF)ₙ⁻, (CN)₂N⁻, (CF₃SO₂) (CF₃CO)N⁻, (CH₃)₂PO₄⁻, (C₂H₅)₂PO₄⁻, CH₃(OC₂H₄)₂OSO₃⁻, C₆H₄(CH₃)SO₃⁻, (C₂F₅)₃PF₃⁻, CH₃CH(OH)COO⁻ and (FSO₂)₂N⁻. More preferably, lithium salts such as LiBr, LiI, LiBF₄, LiPF₆, LiSCN, LiClO₄, LiCF₃SO₃, Li(CF₃SO₂)₂N, Li(C₂F₅SO₂)₂N, Li(FSO₂)₂N and Li(CF₃SO₂)₃C are used. Still more preferably, LiCF₃SO₃, Li(CF₃SO₂)₂N, Li(C₂F₅SO₂)₂N, Li(C₃F₇SO₂)₂N, Li(C₄F₉SO₂)₂N, Li(FSO₂)₂N and Li(CF₃SO₂)₃C are used. These alkali metal salts may be used alone or in a mixture of two or more.

The content of the alkali metal salt is preferably from 0.001 to 5 parts by weight, more preferably from 0.005 to 3 parts by weight, still more preferably from 0.005 to 1 part by weight, even more preferably from 0.005 to 0.5 part by weight, and most preferably from 0.005 to 0.09 part by weight, based on 100 parts by weight of the (meth)acryl-based polymer. It is preferred that the content is within the above range since it is easy to reconcile antistatic properties and low staining properties.

When using the ionic liquid as an antistatic agent, it is possible to obtain a pressure-sensitive adhesive layer having high antistatic effect without impairing adherability. Although details of the reason why excellent antistatic properties are obtained by use of the ionic liquid are not clear, it is considered that it is easy for the ionic liquid to undergo molecular motion because of its liquid form, and thus excellent antistatic properties are obtained. It is considered that excellent peeling antistatic properties of the adherend is carried out by transferring a trace amount of the ionic liquid to the adherend in case of preventing electrification to the adherend.

Since the ionic liquid is in a state of liquid at room temperature (25°C), addition and dispersion or dissolution in a pressure-sensitive adhesive can be easily performed as compared with a salt in a state of solid. The ionic liquid has such a feature that antistatic properties can be continuously obtained without losing with the lapse of time because of no vapor pressure (non-volatility). The ionic liquid refers to a melt salt (ionic compound) which is a state of liquid at room temperature (25°C).

The ionic liquid to be preferably used is composed of organic cation components represented by the following general formulas (A) to (E) and an anion component.

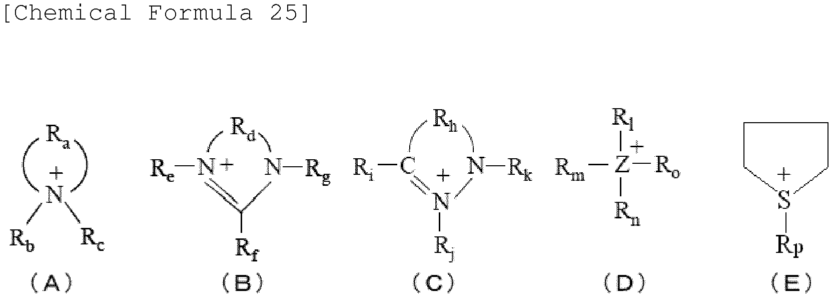

In the formula (A), Rₐ represents a hydrocarbon group of a carbon number of 4 to 20, and may contain a hetero atom, and R_{b} and R_{c} are the same or different, represent hydrogen or a hydrocarbon group of a carbon number of 1 to 16, and may contain a hetero atom, provided that, when a nitrogen atom contains a double bond, R_{c} is not present.

In the formula (B), R_{d} represents a hydrocarbon group of a carbon number of 2 to 20, and may contain a hetero atom, and Rₑ, R_{f} and Rg are the same or different, represent hydrogen or a hydrocarbon group of a carbon number of 1 to 16, and may contain a hetero atom.

In the formula (C), Rₕ represents a hydrocarbon group of a carbon number of 2 to 20, and may contain a hetero atom, and Rᵢ, Rⱼ and Rₖ are the same or different, represent a hydrogen or a hydrocarbon group of a carbon number of 1 to 16, and may contain a hetero atom.

In the formula (D), Z represents a nitrogen atom, a sulfur atom, or a phosphorus atom, and Rᵢ, Rₘ, Rₙ and Rₒ are the same or different, represent a hydrocarbon group of a carbon number of 1 to 20, and may contain a hetero atom, provided that, when Z is a sulfur atom, Rₒ is not present.

R_{P} in the formula (E) represents a hydrocarbon group of 1 to 18 carbon atoms and may be a functional group in which a part of the hydrocarbon group is substituted with a hetero atom.

Examples of the cation represented by the formula (A) include a pyridinium cation, a piperidinium cation, a pyrrolidinium cation, a cation having a pyrroline skeleton, a cation having a pyrrole skeleton, and a morpholinium cation.

Specific examples thereof include a 1-ethylpyridinium cation, a 1-butylpyridinium cation, a 1-hexylpyridinium cation, a 1-butyl-3-methylpyridinium cation, a 1-butyl-4-methylpyridinium cation, a 1-hexyl-3-methylpyridinium cation, a 1-butyl-3,4-dimethylpyridinium cation, a 1,1-dimethylpyrrolidinium cation, a 1-ethyl-1-methylpyrrolidinium cation, a 1-methyl-1-propylpyrrolidinium cation, a 1-methyl-1-butylpyrrolidinium cation, a 1-methyl-1-pentylpyrrolidinium cation, a 1-methyl-1-hexylpyrrolidinium cation, a 1-methyl-1-heptylpyrrolidinium cation, a 1-ethyl-1-propylpyrrolidinium cation, a 1-ethyl-1-butylpyrrolidinium cation, a 1-ethyl-1-pentylpyrrolidinium cation, a 1-ethyl-1-hexylpyrrolidinium cation, a 1-ethyl-1-heptylpyrrolidinium cation, a 1,1-dipropylpyrrolidinium cation, a 1-propyl-1-butylpyrrolidinium cation, a 1,1-dibutylpyrrolidinium cation, a pyrrolidinium-2-on cation, a 1-propylpiperidinium cation, a 1-pentylpiperidinium cation, a 1,1-dimethylpiperidinium cation, a 1-methyl-1-ethylpiperidinium cation, a 1-methyl-1-propylpiperidinium cation, a 1-methyl-1-butylpiperidinium cation, a 1-methyl-1-pentylpiperidinium cation, a 1-methyl-1-hexylpiperidinium cation, a 1-methyl-1-heptylpiperidinium cation, a 1-ethyl-1-propylpiperidinium cation, a 1-ethyl-1-butylpiperidinium cation, a 1-ethyl-1-pentylpiperidinium cation, a 1-ethyl-1-hexylpiperidinium cation, a 1-ethyl-1-heptylpiperidinium cation, a 1,1-dipropylpiperidinium cation, a 1-propyl-1-butylpiperidinium cation, a 1,1-dibutylpiperidinium cation, a 2-methyl-1-pyrroline cation, a 1-ethyl-2-phenylindole cation, a 1,2-dimethylindole cation, a 1-ethylcarbazole cation, a N-ethyl-N-methylmorphonium cation and the like.

Examples of the cation represented by the formula (B) include an imidazolium cation, a tetrahydropyrimidinium cation, and a dihydropyrimidinium cation.

Specific examples thereof include a 1,3-dimethylimidazolium cation, a 1,3-diethylimidazolium cation, a 1-ethyl-3-methylimidazolium cation, a 1-butyl-3-methylimidazolium cation, a 1-hexyl-3-methylimidazolium cation, a 1-octyl-3-methylimidazolium cation, a 1-decyl-3-methylimidazolium cation, a 1-dodecyl-3-methylimidazolium cation, a 1-tetradecyl-3-methylimidazolium cation, a 1,2-dimethyl-3-propylimidazolium cation, a 1-ethyl-2,3-dimethylimidazolium cation, a 1-butyl-2,0-dimethylimidazolium cation, a 1- butyl-2,3-dimethylimidazolium cation, a 1-hexyl-2,3-dimethylimidazolium cation, a 1-(2-methoxyethyl)-3-methylimidazolium cation, a 1,3-dimethyl-1,4,5,6-tetrahydropyrimidinium cation, a 1,2,3-trimethyl-1,4,5,6-tetrahydropyrimidinium cation, a 1,2,3,4-tetramethyl-1,4,5,6-tetrahydropyrimidinium cation, a 1,2,3,5-tetramethyl-1,4,5,6-tetrahydropyrimidinium cation, a 1,3-dimethyl-1,4-dihydropyrimidinium cation, a 1,3-dimethyl-1,6-dihydropyrimidinium cation, a 1,2,3-trimethyl-1,4-dihydropyrimidinium cation, a 1,2,3-trimethyl-1,6-dihydropyrimidinium cation, a 1,2,3,4-tetramethyl-1,4-dihydropyrimidinium cation, a 1,2,3,4-tetramethyl-1,6-dihydropyrimidinium cation and the like.

Examples of the cation represented by the formula (C) include a pyrazolium cation, and a pyrazolinium cation.

Specific examples include a 1-methylpyrazolium cation, a 3-methylpyrazolium cation, a 1-ethyl-2-methylpyrazolinium cation, a 1-ethyl-2,3,5-trimethylpyrazolium cation, a 1-propyl-2,3,5-trimethylpyrazolium cation, and a 1-butyl-2,3,5-trimethylpyrazolium cation, a 1-ethyl-2,3,5-trimethylpyrazolinium cation, a 1-propyl-2,3,5-trimethylpyrazolinium cation, and a 1-butyl-2,3,5-trimethylpyrazolinium cation.

Examples of the cation represented by the formula (D) include a tetraalkylammonium cation, a trialkylsulfonium cation, a tetraalkylphosphonium cation, and those cations in which a part of the alkyl group is substituted with an alkenyl group, an alkoxyl group, or an epoxy group.

Specific examples thereof include a tetramethylammonium cation, a tetraethylammonium cation, a tetrabutylammonium cation, a tetrapentylammonium cation, a tetrahexylammonium cation, a tetraheptylammonium cation, a triethylmethylammonium cation, a tributylethylammonium cation, a trimethyldecylammonium cation, an N,N-diethyl-N-methyl-N-(2-methoxyethyl)ammonium cation, a glycidyltrimethylammonium cation, a trimethylsulfonium cation, a triethylsulfonium cation, a tributylsulfonium cation, a trihexylsulfonium cation, a diethylmethylsulfonium cation, a dibutylethylsulfonium cation, a dimethyldecylsulfonium cation, a tetramethylphosphonium cation, a tetraethylphosphonium cation, a tetrabutylphosphonium cation, a tetrahexylphosphonium cation, a tetraoctylphosphonium cation, a triethylmethylphosphonium cation, a tributylethylphosphonium cation, a trimethyldecylphosphonium cation, a diallyldimethylammonium cation, a tributyl-(2-methoxyethyl)phosphonium cation and the like. Among these cations, preferably used cations are asymmetric tetraalkylammonium cations, trialkylsulfonium cations and tetraalkylphosphonium cation, such as a triethylmethylammonium cation, a tributylethylammonium cation, a trimethyldecylammonium cation, a diethylmethylsulfonium cation, a dibutylethylsulfonium cation, a dimethyldecylsulfonium cation, a triethylmethylphosphonium cation, a tributylethylphosphonium cation and a trimethyldecylphosphonium cation; an N,N-diethyl-N-methyl-N-(2-methoxyethyl)ammonium cation, a glycidyltrimethylammonium cation, a diallyldimethylammonium cation, an N,N-dimethyl-N-ethyl-N-propylammonium cation, an N,N-dimethyl-N-ethyl-N-butylammonium cation, an N,N-dimethyl-N-ethyl-N-pentylammonium cation, an N,N-dimethyl-N-ethyl-N-hexylammonium cation, an N,N-dimethyl-N-ethyl-N-heptylammonium cation, an N,N-dimethyl-N-ethyl-N-nonylammonium cation, an N,N-dimethyl-N,N-dipropylammonium cation, an N,N-diethyl-N-propyl-N-butylammonium cation, an N,N-dimethyl-N-propyl-N-pentylammonium cation, an N,N-dimethyl-N-propyl-N-hexylammonium cation, an N,N-dimethyl-N-propyl-N-heptylammonium cation, an N,N-dimethyl-N-butyl-N-hexylammonium cation, an N,N-diethyl-N-butyl-N-heptylammonium cation, an N,N-dimethyl-N-pentyl-N-hexylammonium cation, an N,N-dimethyl-N,N-dihexylammonium cation, a trimethylheptylammonium cation, an N,N-diethyl-N-methyl-N-propylammonium cation, an N,N-diethyl-N-methyl-N-pentylammonium cation, an N,N-diethyl-N-methyl-N-heptylammonium cation, an N,N-diethyl-N-propyl-N-pentylammonium cation, a triethylpropylammonium cation, a triethylpentylammonium cation, a triethylheptylammonium cation, an N,N-dipropyl-N-methyl-N-ethylammonium cation, an N,N-dipropyl-N-methyl-N-pentylammonium cation, an N,N-dipropyl-N-butyl-N-hexylammonium cation, an N,N-dipropyl-N,N-dihexylammonium cation, an N,N-dibutyl-N-methyl-N-pentylammonium cation, an N,N-dibutyl-N-methyl-N-hexylammonium cation, a trioctylmethylammonium cation and a N-methyl-N-ethyl-N-propyl-N-pentylammonium cation.

The cation represented by the formula (E) includes, for example, a sulfonium cation. Specific examples of Rp in the formula (E) include a methyl group, an ethyl group, a propyl group, a butyl group, a hexyl group, an octyl group, a nonyl group, a decyl group, a dodecyl group, a tridecyl group, a tetradecyl group, an octadecyl group and the like.

On the other hand, the anionic component is not particularly limited as far as it satisfies that it becomes an ionic liquid. Specifically, for example, Cl⁻, Br⁻, I⁻, AlCl₄⁻, Al₂Cl₇⁻, BF₄⁻ , PF₆⁻, ClO₄⁻, NO₃⁻, CH₃COO⁻, CF₃COO⁻, CH₃SO₃⁻, CF₃SO₃⁻, (CF₃SO₂)₂N⁻,(C₃F₇SO₂)2N⁻, (C₄F₉SO₂)₂N⁻ ,(CF₃SO₂)₃C⁻, AsF₆⁻, SbF₆⁻, NbF₆⁻, TaF₆⁻, F(HF)ₙ⁻, (CN)₂N⁻, C₄F₉SO₃⁻, (C₂F₅SO₂)₂N⁻, C₃F₇COO⁻, (CF₃SO₂) (CF₃CO)N⁻ ,C₉H₁₉OSO₃⁻, (CH₃)₂PO₄⁻, (C₂H₅)₂PO₄⁻, C₂H₅OSO₃⁻, C₆H₁₃OSO₃⁻, C₈H₁₇OSO₃⁻, CH₃(OC₂H₄)₂OSO₃⁻, C₆H₄(CH₃)SO₃⁻, (C₂F₅)₃PF₃⁻, CH₃CH (OH) COO⁻ , and (FSO₂)₂N⁻ are used. Among them, in particular, an anionic component containing a fluorine atom is preferably used because a low melting point ionic compound is obtained

It is also possible to use, as an anion component, an anion represented by the following formula (F).

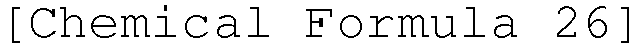

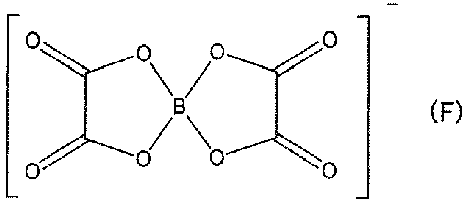

An anion component having a fluorine atom is particularly preferably used as the anion component since an ionic liquid having a low melting point can be obtained.

The ionic liquid used in the present invention is appropriately selected from a combination of the cation component and the anion component, and specific examples thereof include 1-butylpyridinium tetrafluoroborate, 1-butylpyridinium hexafluorophosphate, 1-butyl-3-methylpyridinium tetrafluoroborate, 1-butyl-3-methylpyridinium trifluoromethanesulfonate, 1-butyl-3-methylpyridinium bis(trifluoromethanesulfonyl)imide, 1-butyl-3-methylpyridinium bis(pentafluoroethanesulfonyl)imide, 1-hexylpyridinium tetrafluoroborate, 1,1-dimethylpyrrolidinium bis(trifluoromethanesulfonyl)imide, 1-methyl-1-ethylpyrrolidinium bis(trifluoromethanesulfonyl)imide, 1-methyl-1-propylpyrrolidinium
bis(trifluoromethanesulfonyl)imide, 1-methyl-1-butylpyrrolidinium bis(trifluoromethanesulfonyl)imide, 1-methyl-1-pentylpyrrolidinium
bis(trifluoromethanesulfonyl)imide, 1-methyl-1-hexylpyrrolidinium bis(trifluoromethanesulfonyl)imide, 1-methyl-1-heptylpyrrolidinium
bis(trifluoromethanesulfonyl)imide, 1-ethyl-1-propylpyrrolidinium bis(trifluoromethanesulfonyl)imide, 1-ethyl-1-butylpyrrolidinium
bis(trifluoromethanesulfonyl)imide, 1-ethyl-1-pentylpyrrolidinium bis(trifluoromethanesulfonyl)imide, 1-ethyl-1-hexylpyrrolidinium
bis(trifluoromethanesulfonyl)imide, 1-ethyl-1-heptylpyrrolidinium bis(trifluoromethanesulfonyl)imide, 1,1-dipropylpyrrolidinium
bis(trifluoromethanesulfonyl)imide, 1-propyl-1-butylpyrrolidinium bis(trifluoromethanesulfonyl)imide, 1,1-dibutylpyrrolidinium bis(trifluoromethanesulfonyl)imide, 1-propylpiperidinium bis(trifluoromethanesulfonyl)imide, 1-pentylpiperidinium bis(trifluoromethanesulfonyl)imide, 1,1-dimethylpiperidinium bis(trifluoromethanesulfonyl)imide, 1-methyl-1-ethylpiperidinium
bis(trifluoromethanesulfonyl)imide, 1-methyl-1-propylpiperidinium bis(trifluoromethanesulfonyl)imide, 1-methyl-1-butylpiperidinium
bis(trifluoromethanesulfonyl)imide, 1-methyl-1-pentylpiperidinium bis(trifluoromethanesulfonyl)imide, 1-methyl-1-hexylpiperidinium
bis(trifluoromethanesulfonyl)imide, 1-methyl-1-heptylpiperidinium bis(trifluoromethanesulfonyl)imide, 1-ethyl-1-propylpiperidinium
bis(trifluoromethanesulfonyl)imide, 1-ethyl-l-butylpiperidinium bis(trifluoromethanesulfonyl)imide, 1-ethyl-1-pentylpiperidinium
bis(trifluoromethanesulfonyl)imide, 1-ethyl-1-hexylpiperidinium bis(trifluoromethanesulfonyl)imide, 1-ethyl-1-heptylpiperidinium
bis(trifluoromethanesulfonyl)imide, 1,1-diproylpiperidinium
bis(trifluoromethanesulfonyl)imide, 1-propyl-1-butylpiperidinium bis(trifluoromethanesulfonyl)imide, 1,1-dibutylpiperidinium bis(trifluoromethanesulfonyl)imide, 1,1-dimethylpyrrolidinium
bis(pentafluoroethanesulfonyl)imide, 1-methyl-1-ethylpyrrolidinium bis(pentafluoroethanesulfonyl)imide, 1-methyl-1-propylpyrrolidinium
bis(pentafluoroethanesulfonyl)imide, 1-methyl-1-butylpyrrolidinium bis(pentafluoroethanesulfonyl)imide, 1-methyl-1-pentylpyrrolidinium
bis(pentafluoroethanesulfonyl)imide, 1-methyl-1-hexylpyrrolidinium bis(pentafluoroethanesulfonyl)imide, 1-methyl-1-heptylpyrrolidinium
bis(pentafluoroethanesulfonyl)imide, 1-ethyl-1-propylpyrrolidinium bis(pentafluoroethanesulfonyl)imide, 1-ethyl-1-butylpyrrolidinium
bis(pentafluoroethanesulfonyl)imide, 1-ethyl-1-pentylpyrrolidinium bis(pentafluoroethanesulfonyl)imide, 1-ethyl-1-hexylpyrrolidinium
bis(pentafluoroethanesulfonyl)imide, 1-ethyl-1-heptylpyrrolidinium bis(pentafluoroethanesulfonyl)imide, 1,1-dipropylpyrrolidinium
bis(pentafluoroethanesulfonyl)imide, 1-propyl-1-butylpyrrolidinium bis(pentafluoroethanesulfonyl)imide, 1,1-dibutylpyrrolidinium
bis(pentafluoroethanesulfonyl)imide, 1-propylpiperidinium bis(pentafluoroethanesulfonyl)imide, 1-pentylpiperidinium bis(pentafluoroethanesulfonyl)imide, 1,1-dimethylpiperidinium bis(pentafluoroethanesulfonyl)imide, 1-methyl-1-ethylpiperidinium
bis(pentafluoroethanesulfonyl)imide, 1-methyl-1-propylpiperidinium bis(pentafluoroethanesulfonyl)imide, 1-methyl-1-butylpiperidinium
bis(pentafluoroethanesulfonyl)imide, 1-methyl-1-pentylpiperidinium bis(pentafluoroethanesulfonyl)imide, 1-methyl-1-hexylpiperidinium
bis(pentafluoroethanesulfonyl)imide, 1-methyl-1-heptylpiperidinium bis(pentafluoroethanesulfonyl)imide, 1-ethyl-1-propylpiperidinium
bis(pentafluoroethanesulfonyl)imide, 1-ethyl-1-butylpiperidinium bis(pentafluoroethanesulfonyl)imide, 1-ethyl-1-pentylpiperidinium
bis(pentafluoroethanesulfonyl)imide, 1-ethyl-1-hexylpiperidinium bis(pentafluoroethanesulfonyl)imide, 1-ethyl-1-heptylpiperidinium
bis(pentafluoroethanesulfonyl)imide, 1,1-dipropylpiperidinium bis(pentafluoroethanesulfonyl)imide, 1-propyl-1-butylpiperidinium
bis(pentafluoroethanesulfonyl)imide, 1,1-dibutylpiperidinium bis(pentafluoroethanesulfonyl)imide, 2-methyl-1-pyrroline tetrafluoroborate, 1-ethyl-2-phenylindole tetrafluoroborate, 1,2-dimethylindole tetrafluoroborate, 1-ethylcarbazole tetrafluoroborate, 1-ethyl-3-methylimidazolium tetrafluoroborate, 1-ethyl-3-methylimidazolium acetate, 1-ethyl-3-methylimidazolium trifluoroacetate, 1-ethyl-3-methylimidazolium heptafluorobutyrate, 1-ethyl-3-methylimidazolium trifluoromethanesulfonate, 1-ethyl-3-methylimidazolium perfluorobutanesulfonate, 1-ethyl-3-methylimidazolium dicyanamide, 1-ethyl-3-methylimidazolium
bis(trifluoromethanesulfonyl)imide, 1-ethyl-3-methylimidazolium bis(pentafluoroethanesulfonyl)imide, 1-ethyl-3-methylimidazolium tris(trifluoromethanesulfonyl)methide, 1-butyl-3-methylimidazolium tetrafluoroborate, 1-butyl-3-methylimidazolium hexafluorophosphate, 1-butyl-3-methylimidazolium trifluoroacetate, 1-butyl-3-methylimidazolium heptafluorobutyrate, 1-butyl-3-methylimidazolium trifluoromethanesulfonate, 1-butyl-3-methylimidazolium perfluorobutanesulfonate, 1-butyl-3-methylimidazolium bis(trifluoromethanesulfonyl)imide, 1-hexyl-3-methylimidazolium bromide, 1-hexyl-3-methylimidazolium chloride, 1-hexyl-3-methylimidazolium tetrafluoroborate, 1-hexyl-3-methylimidazolium hexafluorophosphate, 1-hexyl-3-methylimidazolium trifluoromethanesulfonate, 1-octyl-3-methylimidazolium tetrafluoroborate, 1-octyl-3-methylimidazolium hexafluorophosphate, 1-hexyl-2,3-dimethylimidazolium tetrafluoroborate, 1,2-dimethyl-3-propylimidazolium bis(trifluoromethanesulfonyl)imide, 1-methylpyrazolium tetrafluoroborate, 2-methylpyrazolium tetrafluoroborate, 1-ethyl-2,3,5-trimethylpyrazolium
bis(trifluoromethanesulfonyl)imide, 1-propyl-2,3,5-trimethylpyrazolium bis(trifluoromethanesulfonyl)imide, 1-butyl-2,3,5-trimethylpyrazolium
bis(trifluoromethanesulfonyl)imide, 1-ethyl-2,3,5-trimethylpyrazolium bis(pentafluoroethanesulfonyl)imide, 1-propyl-2,3,5-trimethylpyrazolium
bis(pentafluoroethanesulfonyl)imide, 1-butyl-2,3,5-trimethylpyrazolium bis(pentafluoroethanesulfonyl)imide, 1-ethyl-2,3,5-trimethylpyrazolium
bis(trifluoromethanesulfonyl)trifluoroacetamide, 1-propyl-2,3,5-trimethylpyrazolium
bis(trifluoromethanesulfonyl)trifluoroacetamide, 1-butyl-2,3,5-trimethylpyrazolium
bis(trifluoromethanesulfonyl)trifluoroacetamide, 1-ethyl-2,3,5-trimethylpyrazolinium
bis(trifluoromethanesulfonyl)imide, 1-propyl-2,3,5-trimethylpyrazolinium bis(trifluoromethanesulfonyl)imide, 1-butyl-2,3,5-trimethylpyrazolinium
bis(trifluoromethanesulfonyl)imide, 1-ethyl-2,3,5-trimethylpyrazolinium bis(pentafluoroethanesulfonyl)imide, 1-propyl-2,3,5-trimethylpyrazolinium
bis(pentafluoroethanesulfonyl)imide, 1-butyl-2,3,5-trimethylpyrazolinium bis(pentafluoroethanesulfonyl)imide, 1-ethyl-2,3,5-trimethylpyrazolinium
bis(trifluoromethanesulfonyl)trifluoroacetamide, 1-propyl-2,3,5-trimethylpyrazolinium
bis(trifluoromethanesulfonyl)trifluoroacetamide, 1-butyl-2,3,5-trimethylpyrazolinium
bis(trifluoromethanesulfonyl)trifluoroacetamide, tetrapentylammonium trifluoromethanesulfonate, tetrapentylammonium bis(trifluoromethanesulfofonyl)imide, tetrahexylammonium trifluoromethanesulfonate, tetrahexylammonium bis(trifluoromethanesulfonyl)imide, tetrabutylammonium trifluoromethanesulfonate, tetraheptylammonium bis(trifluoromethanesulfonyl)imide, diallyldimethylammonium tetrafluoroborate, diallyldimethylammonium trifluoromethanesulfonate, diallyldimethylammonium bis(trifluoromethanesulfonyl)imide, diallyldimethylammonium bis(pentafluoroethanesulfonyl)imide, N,N-diethyl-N-methyl-N-(2-methoxyethyl)ammonium tetrafluoroborate, N,N-diethyl-N-methyl-N-(2-methoxyethyl)ammonium trifluoromethanesulfonate, N,N-diethyl-N-methyl-N-(2-methoxyethyl)ammonium bis(trifluoromethanesulfonyl)imide, N,N-diethyl-N-methyl-N-(2-methoxyethyl)ammonium
bis(pentafluoroethanesulfonyl)imide, glycidyltrimethylammonium trifluoromethanesulfonate, glycidyltrimethylammonium bis(trifluoromethanesulfonyl)imide, glycidyltrimethylammonium
bis(pentafluoroethanesulfonyl)imide, tetraoctylphosphonium trifluoromethanesulfonate, tetraoctylphosphonium bis(trifluoromethanesulfonyl)imide, N,N-dimethyl-N-ethyl-N-propylammonium bis(trifluoromethanesulfonyl)imide, N,N-dimethyl-N-ethyl-N-butylammonium
bis(trifluoromethanesulfonyl)imide, N,N-dimethyl-N-ethyl-N-pentylammonium bis(trifluoromethanesulfonyl)imide, N,N-dimethyl-N-ethyl-N-hexylammonium
bis(trifluoromethanesulfonyl)imide, N,N-dimethyl-N-ethyl-N-heptylammonium bis(trifluoromethanesulfonyl)imide, N,N-dimethyl-N-ethyl-N-nonylammonium
bis(trifluoromethanesulfonyl)imide, N,N-dimethyl-N,N-dipropylammonium bis(trifluoromethanesulfonyl)imide, N,N-dimethyl-N-propyl-N-butylammonium
bis(trifluoromethanesulfonyl)imide, N,N-dimethyl-N-propyl-N-pentylammonium bis(trifluoromethanesulfonyl)imide, N,N-dimethyl-N-propyl-N-hexylammonium
bis(trifluoromethanesulfonyl)imide, N,N-dimethyl-N-propyl-N-heptylammonium bis(trifluoromethanesulfonyl)imide, N,N-dimethyl-N-butyl-N-hexylammonium
bis(trifluoromethanesulfonyl)imide, N,N-dimethyl-N-butyl-N-heptylammonium bis(trifluoromethanesulfonyl)imide, N,N-dimethyl-N-pentyl-N-hexylammonium
bis(trifluoromethanesulfonyl)imide, N,N-dimethyl-N,N-dihexylammonium bis(trifluoromethanesulfonyl)imide, trimethylheptylammonium bis(trifluoromethanesulfonyl)imide, N,N-diethyl-N-methyl-N-propylammonium
bis(trifluoromethanesulfonyl)imide, N,N-diethyl-N-methyl-N-pentylammonium bis(trifluoromethanesulfonyl)imide, N,N-diethyl-N-methyl-N-heptylammonium
bis(trifluoromethanesulfonyl)imide, N,N-diethyl-N-propyl-N-pentylammonium bis(trifluoromethanesulfonyl)imide, triethylpropylammonium bis(trifluoromethanesulfonyl)imide, triethylpentylammonium bis(trifluoromethanesulfonyl)imide, triethylheptylammonium bis(trifluoromethanesulfonyl)imide, N,N-dipropyl-N-methyl-N-ethylammonium
bis(trifluoromethanesulfonyl)imide, N,N-dipropyl-N-methyl-N-pentylammonium bis(trifluoromethanesulfonyl)imide, N,N-dipropyl-N-butyl-N-hexylammonium
bis(trifluoromethanesulfonyl)imide, N,N-dipropyl-N,N-dihexylammonium bis(trifluoromethanesulfonyl)imide, N,N-dibutyl-N-methyl-N-pentylammonium
bis(trifluoromethanesulfonyl)imide, N,N-dibutyl-N-methyl-N-hexylammonium bis(trifluoromethanesulfonyl)imide, trioctylmethylammonium bis(trifluoromethanesulfonyl)imide, N-methyl-N-ethyl-N-propyl-N-pentylammonium
bis(trifluoromethanesulfonyl)imide, 1-butylpyridinium (trifluoromethanesulfonyl)trifluoroacetamide, 1-butyl-3-methylpyridinium
(trifluoromethanesulfonyl)trifluoroacetamide, 1-ethyl-3-methylimidazolium
(trifluoromethanesulfonyl)trifluoroacetamide, N-ethyl-N-methylmorpholinium thiocyanate, 4-ethyl-4-methylmorpholinium methylcarbonate and the like.

As the aforementioned ionic liquid, a commercially available ionic liquid may be used, or the liquid may be synthesized as described below. A method of synthesizing an ionic liquid is not particularly limited as far as an objective ionic liquid is obtained. Generally, a halide method, a hydroxide method, an acid ester method, a chelate forming method, and a neutralization method described in the publication "Ionic liquid-The Front and Future of Development-" (published by CMC) are used.

Regarding a halide method, a hydroxide method, an acid ester method, a chelate forming method, and a neutralization method, a synthesis method using an example of a nitrogen-containing onium salt will be shown below, but other ionic liquid such as a sulfur-containing onium salt, and a phosphorus-containing onium salt can be obtained by the similar procedure.

The halide method is a method which is performed by a reaction shown in the following formulas (1) to (3). First, a tertiary amine and alkyl halide are reacted to obtain halide (Reaction Equation (1), as a halogen, chlorine, bromine or iodine is used). The resulting halide is reacted with an acid (HA) having an anion structure (A⁻) of an objective ionic liquid or a salt (MA, M is a cation forming a salt with an objective anion such as ammonium, lithium, sodium and potassium) of an objective ionic liquid to obtain an objective ionic liquid (R₄NA).

### [Chemical formula 27]

(1) R₃N+RX→R₄NX (X: Cl, Br, I)
(2) R₄NX+HA→R₄NA+HX
(3) R₄NX+MA→R₄NA+MX (M: NH₄, Li, Na, K, Ag etc.)

The hydroxide method is a method performed by a reaction shown in (4) to (8). First, a halide (R₄NX) is subjected to ion exchange membrane method electrolysis (reaction equation (4)), an OH-type ion exchange resin method (reaction equation (5)) or a reaction with silver oxide (Ag₂O) (reaction equation (6)) to obtain a hydroxide (R₄NOH) (as a halogen, chlorine, bromine or iodine is used). The resulting hydroxide is subjected to a reaction of reaction equations (7) to (8) as in the aforementioned halide method to obtain an objective ionic liquid (R₄NA).

### [Chemical formula 28]

(4) R₄NX+H₂O→R₄NOH+1/2H₂+1/2X₂ (X: Cl, Br, I)
(5) R₄NX+P-OH→R₄NOH+P-X (P-OH: OH-type ion exchange resin)
(6) R₄NX+1/2Ag₂O+1/2H₂O-R₄NOH+AgX
(7) R₄NOH+HA→R₄NA+H₂O
(8) R₄NOH+MA→R₄NA+MOH (M: NH₄, Li, Na, K, Ag etc.)

The acid ester method is a method performed by a reaction shown in (9) to (11). First, tertiary amine (R₃N) is reacted with acid ester to obtain an acid esterified substance (reaction equation (9), as acid ester, ester of an inorganic acid such as sulfuric acid, sulfurous acid, phosphoric acid, phosphorous acid, and carbonic acid, or ester of organic acid such as methanesulfonic acid, methylphosphonic acid and formic acid is used).The resulting acid esterified substance is subjected to a reaction of reaction equations (10) to (11) as in the aforementioned halide method, to obtain an objective ionic liquid (R₄NA). Alternatively, as acid ester, methyl trifluoromethane sulfonate, or methyl trifluoroacetate may be used to directly obtain an ionic liquid.

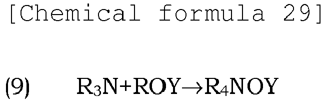

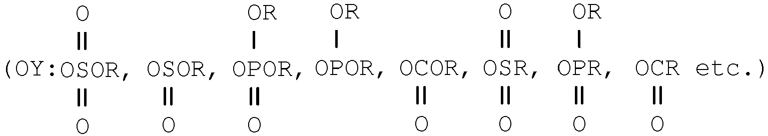

R₄NOY+HA→R4NA+HOY (10)

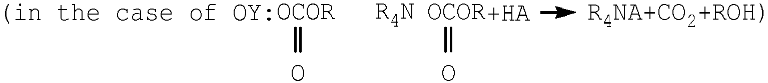

R₄NOY+MA→R₄NA+MOY (M: NH₄, Li, Na, K, Ag etc.) (11)

The chelate forming method is a method performed by a reaction as shown in (12) to (15). First, halide of quaternary ammonium (R₄NX), hydroxide of quaternary ammonium (R₄NOH), or carbonic acid esterified substance of quaternary ammonium (R₄NOCO₂CH₃) is reacted with hydrogen fluoride (HF) or ammonium fluoride (NH₄F) to obtain a quaternary ammonium fluoride salt (reaction equation (12) to (14)). The resulting quaternary ammonium fluoride salt can be subjected to a chelate forming reaction with fluoride such as BF₃, AlF₃, PF₅, ASF₅, SbF₅, NbF₅ and TaF₆, to obtain an ionic liquid (reaction equation (15)).

### [Chemical formula 30]

R₄NX+HF→R₄NF+HX (X: Cl, Br, I) (12)

R₄NY+HF→R₄NF+HY (Y: OH, OCO₂CH₃) (13)

R₄NY+NH₄F→R₄NF+NH₃+HY (Y: OH, OCO₂CH₃) (14)

R₄NF+MFₙ₋₁→R₄NMFₙ (15)

(MFₙ₋₁: BF₃, AlF₃, PF₅, ASF₅, SbF₅, NbF₅, TaF₅ etc.)

The neutralization method is a method performed by a reaction shown in (16). An ionic liquid can be obtained by reacting tertiary amine and an organic acid such as HBF₄, HPF₆, CH₃COOH, CF₃COOH, CF₃SO₃H, (CF₃SO₂)₂NH, (CF₃SO₂)₃CH, and (C₂F₅SO₂)₂NH.

### [Chemical formula 31]

R₃N+HZ→R₃HN⁺Z⁻ (16)

[HZ: HBF₄, HPF₆, CH₃COOH, CF₃COOH, CF₃SO₃H, (CF₃SO₂)₂NH, (CF₃SO₂)₃CH,(C₂F₅SO₂)₂NH organic acid such as]

The aforementioned R in (1) to (16) represents hydrogen or a hydrocarbon group of a carbon number of 1 to 20, and a part of the hydrocarbon group may be functional group substituted with a hetero atom.

The content of the ionic liquid is preferably from 0.001 to 5 parts by weight, more preferably from 0.005 to 3 parts by weight, still more preferably from 0.005 to 1 parts by weight, even more preferably from 0.005 to 0.5 parts by weight, and most preferably from 0.005 to 0.09 parts by weight, based on 100 parts by weight of the (meth)acryl-based polymer. It is preferred that the content is within the above range since it is easy to reconcile antistatic properties and low staining properties.

The organopolysiloxane used in the present invention is an organopolysiloxane having an oxyalkylene chain, which is represented by the following formula.

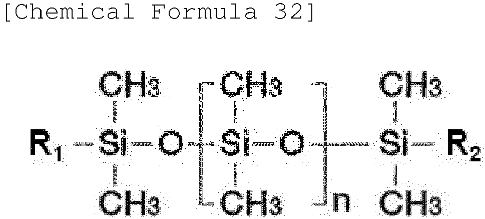

wherein R₁ and/or R₂ have/has an oxyalkylene chain of 1 to 6 carbon atoms, an alkylene group in the oxyalkylene chain may be a straight or branched chain and the oxyalkylene chain may have an alkoxy group or a hydroxyl group at the end, and any one of R₁ or R₂ may be a hydroxyl group or an alkyl group or an alkoxy group, and a part of the alkyl group and alkoxy group may be a functional group substituted with a hetero atom; and n is an integer of 1 to 300.

The organopolysiloxane to be used is an organopolysiloxane in which a moiety containing siloxane (siloxane moiety) is a main chain and an oxyalkylene chain is bonded to the end of the main chain. In case of using an organosiloxane having (bonding) an oxyalkylene chain in the main chain, it becomes easy to reduce a peeling force at high-speed peeling when compared with those having an oxyalkylene chain (including a polyoxyalkylene chain) in a side chain of a siloxane moiety. It is considered that use of the organosiloxane having the oxyalkylene chain enables balanced compatibility with the ionic compound and easy removal in case of using a (meth)acryl-based polymer and an ionic compound.

It is possible to use, as the organopolysiloxane in the present invention, for example, those with the following constitution. Specifically, R₁ and/or R₂ in the formula has an oxyalkylene chain containing a hydrocarbon group of 1 to 6 carbon atoms, and examples of the oxyalkylene chain include an oxymethylene group, an oxyethylene group, an oxypropylene group, an oxybutylene group and the like. In particular, an oxyethylene group and an oxypropylene group are preferable. When both R₁ and R₂ have an oxyalkylene chain, they may be the same or different.

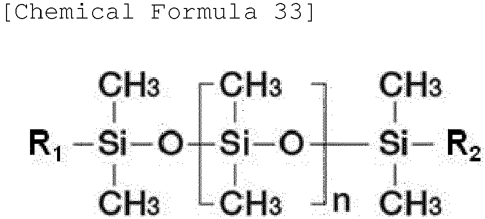

The hydrocarbon group of the oxyalkylene chain may be a straight or branched chain.

The end of the oxyalkylene chain may be either an alkoxy group or a hydroxyl group, and more preferably an alkoxy group. In case of bonding a separator to a surface of a pressure-sensitive adhesive layer for the purpose of protecting a pressure-sensitive surface, when an organopolysiloxane has a hydroxyl group at the end, an interaction with the separator occurs and thus a peeling force may sometimes increase in case of removing the separator from the surface of a pressure-sensitive adhesive layer.

n is an integer of 1 to 300 and is preferably from 10 to 200, and more preferably from 20 to 150. If n is within the above range, balanced compatibility with a base polymer is achieved, resulting in preferred aspect. It is also possible to have a reactive substituent such as a (meth)acryloyl group, an allyl group or a hydroxyl group in the molecule. The organopolysiloxane may be used alone or in a mixture of two or more.

Specific examples of the organopolysiloxane having the oxyalkylene chain include commercially available products such as X-22-4952, X-22-4272, X-22-6266, KF-6004 and KF-889 (all manufactured by Shin-Etsu Chemical Co., Ltd.); BY16-201 and SF8427 (all manufactured by Dow Corning Toray Co., Ltd.); and IM22 (all manufactured by Wacker Asahikasei Silicone Co., Ltd.). These compounds may be used alone or in a mixture of two or more.

The content of the organopolysiloxane is preferably from 0.01 to 5 parts by weight, more preferably from 0.03 to 3 parts by weight, still more preferably from 0.05 to 1 part by weight, and even more preferably from 0.05 to 0.5 parts by weight, based on 100 parts by weight of the (meth)acryl-based polymer. It is preferred that the content is within the above range since it is easy to reconcile antistatic properties and easy peelability (removability).

The pressure-sensitive adhesive layer of the present invention is preferably produced by crosslinking the pressure-sensitive adhesive composition. Selection of the structural units and component ratio of the (meth)acryl-based polymer, selection of the crosslinking agent, appropriate control of the addition ratio of the crosslinking agent, and crosslinking make it possible to obtain a pressure-sensitive adhesive sheet with more excellent heat resistance.

The crosslinking agent used in the present invention may be an isocyanate compound, an epoxy compound, a melamine resin, an aziridine derivative, a metal chelate compound, or the like. In particular, an isocyanate compound or an epoxy compound is preferably used mainly from the viewpoint of obtaining moderate cohesive strength. These compounds may be used alone or in a mixture of two or more.

Examples of the isocyanate compound include aliphatic polyisocyanates such as trimethylene diisocyanate, butylene diisocyanate, hexamethylene diisocyanate (HDI) and dimer acid diisocyanate; alicyclic isocyanates such as cyclopentylene diisocyanate, cyclohexylene diisocyanate and isophorone diisocyanate (IPDI); aromatic isocyanates such as 2,4-tolylene diisocyanate, 4,4'-diphenylmethane diisocyanate and xylylene diisocyanate (XDI); and modified polyisocyanates obtained by modifying the above isocyanates with an allophanate bond, a buret bond, an isocyanurate bond, an uretdione bond, a urea bond, a carbodiimide bond, an uretonimine bond, an oxadiazinetrione bond and the like.

Specific examples of the modified polyisocyanate include trimethylolpropane/tolylene diisocyanate trimer adduct (trade name: COLONATE L, manufactured by Nippon Polyurethane Industry Co., Ltd.); trimethylolpropane/xylylene diisocyanate trimer adduct (trade name: TAKENATE D110N, manufactured by Takeda Pharmaceutical Co., Ltd.); trimethylolpropane/hexamethylene diisocyanate trimer adduct (trade name: COLONATE HL, manufactured by Nippon Polyurethane Industry Co., Ltd.); isocyanate adducts such as an isocyanurate of hexamethylene diisocyanate (trade name: COLONATE HX, manufactured by Nippon Polyurethane Industry Co., Ltd.); buret-modified hexamethylene diisocyanate (trade name: TAKENATE D165N, manufactured by Takeda Pharmaceutical Co., Ltd.), allophanate-modified hexamethylene diisocyanate (trade name: TAKENATE D178N, manufactured by Takeda Pharmaceutical Co., Ltd.), uretodione-modified hexamethylene diisocyanate (trade name: DESMODUR N3400, manufactured by Sumika Bayer Urethane Co., Ltd.) and the like.

These isocyanate compounds may be used alone or in a mixture of two or more. A difunctional isocyanate compound and a trifunctional isocyanate compound may be used in combination.

In a particularly preferred aspect, compounds having an aromatic ring (aromatic isocyanates) among the isocyanate compounds are used. Examples of the isocyanate compound having an aromatic ring include tolylene diisocyanate (TDI), 4,4'-diphenylmethane diisocyanate (MDI), xylylene diisocyanate (XD1), metaxylylene diisocyanate (MXDI), and adducts of these isocyanates and an active hydrogen compound. Specific examples of commercially available products thereof include TAKENATE 300S and TAKENATE 500 (trade name) (all manufactured by Takeda Pharmaceutical Co., Ltd.), Sumidule T80 and Sumidule L (all manufactured by Sumika Bayer Urethane Co., Ltd.), MILLIONATE MR, MILLIONATE MT and COLONATE L (all manufactured by Nippon Polyurethane Industry Co., Ltd.) and the like. These compounds may be used alone or in a mixture of two or more. Use of the isocyanate compound having an aromatic ring makes it possible to obtain a pressure-sensitive adhesive composition which has moderate adhesive power during peeling at low speed and does not cause lifting as compared with the case of using an isocyanate compound having no aromatic ring.

Examples of the epoxy compound include N,N,N',N'-tetraglycidyl-m-xylenediamine (trade name TETRAD-X manufactured by Mitsubishi Gas Chemical Company, Inc.) and 1,3-bis(N,N-diglycidylaminomethyl)cyclohexane (trade name TETRAD-C manufactured by Mitsubishi Gas Chemical Company Inc.). These compounds may be used alone, or may be used by mixing two or more kinds.

Examples of the melamine-based resin include hexamethylolmelamine. Examples of the aziridine derivative include trade name HDU (manufactured by Sogo Pharmaceutical Co., Ltd.), trade name TAZM (manufactured by Sogo Pharmaceutical Co., Ltd.), and trade name TAZO (manufactured by Sogo Pharmaceutical Co., Ltd.) as a commercially available product. These compounds may be used alone, or may be used by mixing two or more kinds.

Metal chelate compounds include a metal component such as aluminum, iron, tin, titanium, or nickel, and a chelate component such as acetylene, methyl acetoacetate, or ethyl lactate. These compounds may be used alone or in a mixture of two or more.

The content of the crosslinking agent used in the present invention is preferably from 0.01 to 15 parts by weight, more preferably from 0.5 to 10 parts by weight, and still more preferably from 0.5 to 5 parts by weight, based on 100 parts by weight of the (meth)acryl-based polymer. If the content is less than 0.01 part by weight, the crosslinking agent may insufficiently form a crosslink, so that the cohesive strength of the pressure-sensitive adhesive composition may be low, which may make it impossible to obtain sufficient heat resistance or tend to cause adhesive residue. On the other hand, if the content is more than 15 parts by weight, the polymer may have a high cohesive strength to reduce fluidity, so that the wettability on a polarizing plate may be insufficient, which may tend to cause bulging between the polarizing plate and the pressure-sensitive adhesive composition layer. These crosslinking agents may be used alone or in a mixture of two or more.

In an embodiment of the present invention, a polyfunctional monomer having two or more radiation-reactive unsaturated bonds may be added as a crosslinking agent to the pressure-sensitive adhesive composition. In this case, the pressure-sensitive adhesive composition may be crosslinked by application of radiations. A single molecule of the polyfunctional monomer may have two or more radiation-reactive unsaturated bonds derived from one or more radiation-crosslinkable (curable) moieties such as vinyl, acryloyl, methacryloyl, and vinylbenzyl groups. The polyfunctional monomer that may be preferably used generally has 10 or less radiation-reactive unsaturated bonds. These compounds may be used alone or in a mixture of two or more.

Examples of the polyfunctinal monomer include ethylene glycol di(meth)acrylate, diethlene glycol di(meth)acrylate, tetraethylene glycol di(meth)acrylate, neopentyl glycol di(meth)acrylate, 1,6-hexanediol di(meth)acrylate, trimethylolpropane tri(meth)acrylate, pentaerythritol tri(meth)acrylate, dipentaerythritol hexa(meth)acrylate, divinylbenzene, and N,N'-methylenebisacrylamide.

An amount of the polyfunctinoal monomer to be used depends on balance between a (meth)acryl-based polymer to be crosslinked, and is appropriately selected depending on utility as a pressure-sensitive adhesive sheet. In order to obtain sufficient heat resistance due to a cohesive strength of an acryl pressure-sensitive adhesive, generally, the monomer is preferably blended at 0.1 to 30 parts by weight relative to 100 parts by weight of a (meth)acryl-based polymer. From a viewpoint of flexibility and tackiness, the monomer is preferably blended at 10 parts by weight or less relative to 100 parts by weight of a (meth)acryl-based polymer.

Examples of radiation include ultraviolet ray, laser ray, **α** ray, **β** ray, **γ** ray, X-ray, and electron beam. From a viewpoint of controlling property and better handling property and a cost, ultraviolet ray is suitably used.
More preferably, ultraviolet ray having a wavelength of 200 to 400nm is used. Ultraviolet ray can be irradiated using an appropriate light source such as a high pressure mercury lamp, a micro-wave excitation-type lamp, and a chemical lamp. When ultraviolet ray is used as irradiation, a photopolymerization initiator is added to an acryl pressure-sensitive adhesive layer.

The photopolymerization initiator depends on a kind of a radiation-reactive component, and may be a substance which produces a radical or a cation by irradiating ultraviolet ray having an appropriately wavelength which can trigger the polymerization reaction.

Example of the photoradical polymerization initiator include benzoins such as benzoin, benzoin methyl ether, benzoin ethyl ether, methyl o-benzoylbenzoate-p-benzoin ethyl ether, benzoin isopropyl ether, and **α**-methylbenzoin, acetophenes such as benzylmethylketal, trichloroacetophenone, 2,2-diethoxyacetophenone, and 1-hydroxycyclohexyl phenyl ketone, propiophenones such as 2-hydroxy-2-methylpropiophenone, and 2-hydroxy-4'-isopropyl-2-methylpropiophenone, benzophenones such as benzophenone, methylbenzophenone, p-chlorobenzophenone, and p-dimethylaminobenzophenone, thioxanthons such as 2-chlorothioxanthon, 2-ethylthioxanthon, and 2-isopropylthioxanthon, acylphosphine oxides such as bis(2,4,6-trimethylbenzoyl)-phenylphosphine oxide, 2,4,6-trimethylbenzoyldiphenylphosphine oxide, and (2,4,6-trimethylbenzoyl)-(ethoxy)-phenylphosphine oxide, benzil, dibenzsuberone, and **α**-acyloxime ether.

Examples of a photocation polymerization initiator include onium salts such as an aromatic diazonium salt, an aromatic iodonium salt, and an aromatic sulfonium salt, organometallic complexes such as an ion-allene complex. a titanocene complex, and an aryl silanol-aluminum complex, nitrobenzyl ester, sulfonic acid derivative, phosphoric acid ester, phenolsulfonic acid ester, diazonaphthoquinone, and N-hydroxymidosulfonate. Two or more kinds of the photopolymerization initiators may be used by mixing.

It is preferably that the photopolymerization initiator is blended usually in a range of 0.1 to 10 parts by weight, preferably 0.2 to 7 parts by weight relative to 100 parts by weight of a (meth)acryl-based polymer. It is preferred that the amount of the photopolymerization initiator is within the above range since it is easy to control a polymerization reaction and moderate molecular weight is obtained.

Further, it is also possible to use a photoinitiation polymerization assistant such as amines. Examples of the photoinitiation assistant include 2-dimethylaminoethyl benzoate, diemethylaminoacetophenone, p-dimethylaminobenzoic acid ethyl ester, and p-dimethylaminobenzoic acid isoamyl ester. Two or more kinds of the photopolymerization initiation assistants may be used. It is preferably that the polymerization initiation assistant is blended at 0.05 to 10 parts by weight, further 0.1 to 7 parts by weight relative to 100 parts by weight a (meth)acryl-based polymer. It is preferred that the amount of the photopolymerization initiator is within the above range since it is easy to control a polymerization reaction and moderate molecular weight is obtained.

When a photopolymerization initiator as an arbitrary component is added as described above, a pressure-sensitive adhesive layer can be obtained by coating the pressure-sensitive adhesive composition directly on a subject to be protected, or coating on one side or both sides of a supporting substrate, and performing light irradiation. Usually, a pressure-sensitive adhesive layer is used by photopolymerization by irradiating with ultraviolet ray having an irradiance of 1 to 200mW/cm² at a wavelength of 300 to 400nm, at an expose dose of around 200 to 4000mJ/cm².

The pressure-sensitive adhesive composition of the present invention may contain a polyoxyalkylene chain-containing compound containing no organopolysiloxane. When the pressure-sensitive adhesive composition contains the above compound, it is possible to obtain a pressure-sensitive adhesive composition having more excellent wettability on the adherend.

Specific examples of the polyoxyalkylene chain-containing compound containing no organopolysiloxane include nonionic surfactants such as polyoxyalkylenealkylamine, polyoxyalkylenediamine, polyoxyalkylene fatty acid ester, polyoxyalkylenesorbitan fatty acid ester, polyoxyalkylene alkyl phenyl ether, polyoxyalkylene alkyl ether, polyoxyalkylene alkyl allyl ether and polyoxyalkylene alkyl phenyl allyl ether; anionic surfactants such as polyoxyalkylene alkyl ether sulfuric acid ester, polyoxyalkylene alkyl ether phosphoric acid ester salt, polyoxyalkylene alkyl phenyl ether sulfuric acid ester salt and polyoxyalkylene alkyl phenyl ether phosphoric acid ester salt; cationic surfactants and amphoteric surfactants, having a polyoxyalkylene chain (polyalkyleneoxide chain); polyether compound having a polyoxyalkylene chain (including derivatives thereof), acryl compounds having a polyoxyalkylene chain (including derivatives thereof); and the like. A polyoxyalkylene chain-containing monomer may be copolymerized with an acryl-based polymer as a polyoxyalkylene chain-containing compound. These polyoxyalkylene chain-containing compounds may be used alone or in a mixture of two or more.

Specific examples of the polyoxyalkylene chain-containing compound containing no organopolysiloxane include a polyether compound having a polyoxyalkylene chain. Specific examples of the polyether compound having a polyoxyalkylene chain include a block copolymer of polypropylene glycol (PPG)-polyethylene glycol (PEG), a block copolymer of PPG-PEG-PPG, a block copolymer of PEG-PPG-PEG and the like. Examples of the polyether compound having a polyoxyalkylene chain include an oxypropylene group-containing compound with etherified end (PPG monoalkyl ether, PEG-PPG monoalkyl ether, etc.), an oxypropylene group-containing compound with acetylated end (PPG with acetylated end, etc.) and the like.

Examples of the acrylic compound having a polyoxyalkylene chain include a (meth)acryl-based polymer having an oxyalkylene group. The addition mole number of an oxyalkylene unit is preferably from 1 to 50, more preferably from 2 to 30, and still more preferably from 2 to 20, from the viewpoint of coordination of an ionic compound. The end of an oxyalkylene chain may remain a hydroxyl group, or may be substituted with an alkyl group, a phenyl group or the like. The (meth)acryl-based polymer having an oxyalkylene group is a polymer which includes an alkylene oxide (meth)acrylate as a monomer unit.

Specific examples of the alkylene oxide (meth)acrylate include ethylene glycol group-containing (meth)acrylates, for example, methoxy-polyethylene glycol (meth)acrylates such as methoxy-diethylene glycol (meth)acrylate and methoxy-triethylene glycol (meth)acrylate; ethoxy-polyethylene glycol (meth)acrylates such as ethoxy-diethylene glycol (meth)acrylate and ethoxytriethylene glycol (meth)acrylate; butoxy-polyethylene glycol (meth)acrylates such as butoxy-diethylene glycol (meth)acrylate and butoxy-triethylene glycol (meth)acrylate; phenoxy-polyethylene glycol (meth)acrylates such as phenoxy-diethylene glycol (meth)acrylate and phenoxy-triethylene glycol (meth)acrylate; nonylphenolpolyethylene glycol (meth)acrylates such as 2-ethylhexylpolyethylene glycol (meth)acrylate; and methoxypolypropylene glycol (meth)acrylates such as methoxydipropylene glycol (meth)acrylate.

It is also possible to use, as the monomer component, other monomer components except for the above components of the alkylene oxide (meth)acrylate. Specific examples of the other monomer component include acrylates and/or methacrylates, having an alkyl group of 1 to 14 carbon atoms, such as methyl (meth)acrylate, ethyl (meth)acrylate, n-butyl (meth)acrylate, s-butyl (meth)acrylate, t-butyl (meth)acrylate, isobutyl (meth)acrylate, hexyl (meth)acrylate, 2-ethylhexyl (meth)acrylate, n-octyl (meth)acrylate, isooctyl (meth)acrylate, n-nonyl (meth)acrylate, isononyl (meth)acrylate, n-dodecyl (meth)acrylate, isodecyl (meth)acrylate, n-dodecyl (meth)acrylate, n-tridecyl (meth)acrylate and n-tetradecyl (meth)acrylate.

It is also possible to appropriately use a carboxyl group-containing (meth)acrylate, a phosphoric acid group-containing (meth)acrylate, a cyano group-containing (meth)acrylate, vinyl esters, aromatic vinyl compound, acid anhydride group-containing (meth)acrylate, hydroxyl group-containing (meth)acrylate, an amide group-containing (meth)acrylate, an amino group-containing (meth)acrylate, an epoxy group-containing (meth)acrylate, N-acryloylmorpholine, vinylethers and the like.

In a preferred aspect, the polyoxyalkylene chain-containing compound is a compound which partially has a (poly)ethylene oxide chain. By mixing such a compound ((poly)ethylene oxide chain-containing compound), compatibility between a base polymer and an antistatic component is improved and bleeding to the adherend is suitably suppressed, and thus less staining pressure-sensitive adhesive composition is obtained. In particular, in case of using a block copolymer of PPG-PEG-PPG, a pressure-sensitive adhesive composition having excellent low staining properties is obtained. In the polyethylene oxide chain-containing compound, the weight of the (poly)ethylene oxide chain, which accounts for the entire compound, is preferably from 5 to 90% by weight, more preferably from 5 to 85% by weight, still more preferably from 5 to 80% by weight, and most preferably from 5 to 75% by weight.

The polyoxyalkylene compound preferably has a number average molecular weight (Mn) of suitably 50,000 or less, preferably 200 to 30,000, more preferably from 200 to 10,000. Usually, those having a number average molecular weight of 200 to 5,000 are suitably used. If Mn is excessively more than 50,000, the compatibility with an acryl-based polymer tends to deteriorate, resulting in whitening of a pressure-sensitive adhesive layer. In contrast, if Mn is excessively less than 200, staining with the polyoxyalkylene compound may be likely to occur. As used herein, Mn refers to a polystyrene-equivalent value obtained by measurement by gel permeation chromatography (GPC).

Specific examples of commercially available products of the polyoxyalkylene compound include ADEKA Pluronic 17R-4 and ADEKA Pluronic 25R-2 (all manufactured by Asahi Denka Co., Ltd.); Emulgen 120 (manufactured by KAO Corporation) and the like.

The amount of the polyoxyalkylene compound can be adjusted, for example, to 0.005 to 20 parts by weight, preferably 0.01 to 10 parts by weight, and more preferably 0.05 to 5 parts by weight, based on 100 parts by weight of an acryl-based polymer. If the amount is too small, the effect of preventing bleeding of an antistatic component may be lowered. In contrast, if the amount is too large, staining with the polyoxyalkylene compound may be likely to occur.

Further, the pressure-sensitive adhesive composition used in the pressure-sensitive adhesive (layer) or the pressure-sensitive adhesive sheet of the present invention may contain other known additives, for example, a coloring agent, a pigment, other powder, a surfactant agent, a plasticizer, a tackifier, a low-molecular-weight polymer, a surface lubricant agent, a leveling agent, an antioxidant, a corrosion preventing agent, a photostabilizer, an ultraviolet absorbing agent, a polymerization inhibitor, a silane coupling agent, and an inorganic or an organic filler, metal powder, granules, foils, and others, which may be added to the pressure-sensitive adhesive composition used in the the pressure-sensitive adhesive (layer) or the pressure-sensitive adhesive sheet of the present invention depending on utility.

The pressure-sensitive adhesive sheet of the present invention preferably includes a supporting film and a pressure-sensitive adhesive layer that is formed from (formed by crosslinking) any one of the pressure-sensitive adhesive compositions described above on one or both sides of the supporting film. Since the pressure-sensitive adhesive sheet of the present invention includes the pressure-sensitive adhesive layer formed by crosslinking the pressure-sensitive adhesive composition with the advantageous effects described above, the pressure-sensitive adhesive sheet is reduced in the risk of staining the adherend. It is also possible to prevent electrification of the non-antistatic subject to be protected when peeled off, in case of using an antistatic agent. Therefore, it is very useful as an antistatic pressure-sensitive adhesive sheet in technical fields related to optical and electronic components, where electrification and staining can cause particularly serious problems.

The pressure-sensitive adhesive sheet of the present invention is produced by forming the pressure-sensitive adhesive layer on a supporting film. In this process, the pressure-sensitive adhesive composition is generally crosslinked after the application of the pressure-sensitive adhesive composition. Alternatively, however, a pressure-sensitive adhesive layer made of the crosslinked pressure-sensitive adhesive composition may be transferred to a supporting film or the like.

The pressure-sensitive adhesive layer may be formed on the supporting film by any appropriate method. For example, the pressure-sensitive adhesive layer is formed on the supporting film by a process including applying the pressure-sensitive adhesive composition to the supporting film and removing the polymerization solvent by drying. Subsequently, curing may be performed for a purpose such as control of migration of the components of the pressure-sensitive adhesive layer or control of the crosslinking reaction. When the pressure-sensitive adhesive composition is applied to the supporting film to form a pressure-sensitive adhesive sheet, one or more solvents other than the polymerization solvent may also newly added to the composition so that the composition can be uniformly applied to the supporting film.

When the pressure-sensitive adhesive sheet of the present invention is manufactured, known methods which have been used in manufacturing pressure-sensitive adhesive tapes may be used to form the pressure-sensitive adhesive layer. Specific examples thereof include roll coating, gravure coating, reverse coating, roll blush, spray coating, air knife coating, and extrusion coating using a die coater.

Pressure-sensitive adhesive sheets of the present invention are formed such that the thickness of aforementioned pressure-sensitive adhesive layer is usually from 3 to 100 µm, and preferably from about 5 to 50 µm. When the pressure-sensitive adhesive layer has a thickness in the above range, moderate balance of removability and adhesive property can be obtained, which is preferred. The pressure-sensitive adhesive sheets are such that the aforementioned pressure-sensitive adhesive layer is coated on one side or both sides of various supporting films comprising a plastic film such as a polyester film, or a porous material such as a paper and a non-woven fabric to form an aspect of a sheet or a tape.

The supporting film used to form the pressure-sensitive adhesive sheet of the present invention, which is produced with the pressure-sensitive adhesive composition of the present invention, usually has a thickness of about 5 to 200 µm, preferably about 10 to 125 µm, and more preferably about 20 to 100 µm. It is preferred that the supporting film has a thickness in the above range since good workability can be obtained in bonding to the adherend and in peeling from the adherend.

The supporting film may be subjected to releasing, or anti-staining treatment with silicone, fluorine, long chain alkyl-based or fatty acid amide-based releasing agent, or a silica powder, easy adhesion treatment such as acid treatment, alkali treatment, primer treatment, corona treatment, plasma treatment, and ultraviolet ray treatment, or coating-type, kneading-type, or deposition-type antistatic treatment, if necessary.

In case of using the pressure-sensitive adhesive sheet of the present invention as a surface protecting film, the pressure-sensitive adhesive layer is preferably formed on one or both sides of the supporting film, and the supporting film is more preferably a plastic film subjected to an antistatic treatment. It is preferred that use of the supporting film suppresses electrification of the surface protecting film per se in case of peeling. Since the pressure-sensitive adhesive sheet of the present invention includes the pressure-sensitive adhesive layer formed by crosslinking the pressure-sensitive adhesive composition with the advantageous effects described above, it is a surface protecting film which has reduced staining to the subject to be protected. Therefore, it is very useful as a surface protecting film in technical fields related to optical and electronic components, where staining can cause particularly serious problems. Use of an ionic compound as an antistatic agent enables suppression of electrification of the non-antistatic protected subject to be protected when peeled off. When the supporting film is a plastic film and the plastic film is subjected to an antistatic treatment, it is possible to obtain those which reduce electrification of a surface protecting film per se and are also excellent in antistatic properties to the subject to be protected.

The supporting film is preferably a plastic film having heat resistance, solvent resistance, and flexibility. When the supporting film has flexibility, the pressure-sensitive adhesive composition can be applied using a roll coater or the like, and the product can be wound into a roll.

The plastic film is not particularly limited as far as it can be formed into a sheet or a film, and examples include a polyolefin film such as polyethylene, polypropylene, poly-1-butene, poly-4-methyl-l-pentene, a polybutadiene film, a polymethylpentene film, an ethylene·propylene copolymer, an ethylene·1-butene copolymer, an ethylene·vinyl acetate copolymer, an ethylene·ethyl acrylate copolymer, and an ethylene·vinyl alcohol copolymer, a polyester film such as polyethylene terephthalate, polyethylene naphthalate, and polybutylene terephthalate, a polyacrylate film, a polyurethane film, a polystyrene film, a polyamide film such as nylon 6, nylon 6,6, and partially aromatic polyamide, a polyvinyl chloride film, a vinyl chloride copolymer film, a polyvinylidene chloride film, and a polycarbonate film.

In the present invention, an antistatic treatment which is performed on the plastic film is not particularly limited, but for example, a method of providing an antistatic layer on at least one side of a generally used substrate, or a method of kneading a kneading-type antistatic agent into a plastic film is used. Examples of a method of providing an antistatic layer on at least one side of a substrate include a method of coating an antistatic resin comprising an antistatic agent and a resin component, or an electrically conductive resin containing an electrically conductive polymer or an electrically conductive substance, and a method of depositing or plating an electrically conductive substance.

Examples of an electrification preventing agent contained in an electrification preventing resin include a cation-type electrification preventing agent having a cationic functional group such as a quaternary ammonium salt, a pyridinium salt, and a primary, secondary or tertiary amino group, an anion-type electrification preventing agent having an anionic functional group such as a sulfonic acid salt, a sulfuric acid ester salt, a phosphonic acid salt, and a phosphoric ester salt, an amphoteric-type electrification preventing agent such as alkylbetain and a derivative thereof, imidazoline and a derivative thereof, and alanine and a derivative thereof, a nonion-type electrification preventing agent such as glycerin and a derivative thereof, and polyethylene glycol and a derivative thereof, and an ionic electrically conductive polymer obtained by polymerizing or copolymerizing a monomer having the aforementioned cation-type, anion-type, or amphoteric-type ionic electrically conductive group. These compounds may be used alone, or two or more of them may be used by mixing.

Specifically, examples of the cation-type electrification preventing agent include a (meth)acrylate copolymer having a quaternary ammonium group such as an alkyl trimethylammmonium salt, acyloylamidopropyltrimethtylammonium methosulfate, an alkylbenzylmethylammonium salt, acyl choline chloride, and polydimethylaminoethyl methacrylate, a styrene copolymer having a quaternary ammonium group such as polyvinylbenzyltrimethylammonium chloride, and a diallylamine copolymer having a quaternary ammonium group such as polydiallyldimethylammonium chloride. The compounds may be used alone, or two or more kinds may be used by mixing.

Examples of the anion-type electrification preventing agent include an alkyl sulfonic acid salt, an alkylbenzenesulfonic acid salt, an alkyl sulfate ester salt, an alkyl ethoxy sulfate ester salt, an alkyl phosphate ester salt, and a sulfonic acid group-containing styrene copolymer. These compounds may be used alone, or two or more kinds may be used by mixing.

Examples of the amphoteric-type electrification preventing agent include alkylbetain, alkylimidazoliumbetain, and carbobetaingrafted copolymer. These compounds may be used alone, or two or more kinds may be used by mixing.

Examples of the nonion-type electrification preventing agent include fatty acid alkylolamide, di(2-hydroxyethyl)alkylamine, polyoxyethylenealkylamine, fatty acid glycerin ester, polyoxyethylene glycol fatty acid ester, sorbitan fatty acid ester, polyoxysorbitan fatty acid ester, polyoxyethylene alkyl phenyl ether, polyoxyethylene alkyl ether, polyethylene glycol, polyoxyethylenediamine, a copolymer consisting of polyether, polyester and polyamide, and methoxypolyethyleneglycol (meth)acrylate. These compounds may be used alone, or two or more kinds may be used by mixing.

Examples of the electrically conductive polymer include polyaniline, polypyrrole and polythiophene. These electrically conductive polymers may be used alone, or two or more kinds may be used by mixing.

Examples of the electrically conductive substance include tin oxide, antimony oxide, indium oxide, cadmium oxide, titanium oxide, zinc oxide, indium, tin, antimony, gold, silver, copper, aluminum, nickel, chromium, titanium, iron, covert, copper iodide, and an alloy and a mixture thereof. These electrically conductive substances may be used alone, or two or more kinds may be used by mixing.

As a resin component used in the electrification preventing resin and the electrically conductive resin, a generally used resin such as polyester, acryl, polyvinyl, urethane, melanine and epoxy is used. In the case of a polymer-type electrification preventing agent, it is not necessary that a resin component is contained. In addition, the electrification preventing resin component may contain compounds of a methylolated or alkylolated melanine series, a urea series, a glyoxal series, and an acrylamide series, an epoxy compound, or an isocyanate compound as a crosslinking agent.

An electrification preventing layer is formed, for example, by diluting the aforementioned electrification preventing resin, electrically conductive polymer or electrically conductive resin with a solvent such as an organic solvent and water, and coating this coating solution on a plastic film, followed by drying.

Examples of an organic solvent used in formation of the electrification preventing layer include methyl ethyl ketone, acetone, ethyl acetate, tetrahydrofuran, dioxane, cyclohexanone, n-hexane, toluene, xylene, methanol, ethanol, n-propanol and isopropanol. These solvents may be used alone, or two or more kinds may be used by mixing.

As a coating method in formation of the electrification preventing layer, the known coating method is appropriately used, and examples include roll coating, gravure coating, reverse coating, roll brushing, spray coating, and air knife coating methods, an immersing and curtain coating method, and an extrusion coating method with a die coater.

A thickness of the aforementioned electrification preventing resin layer, electrically conductive polymer or electrically conductive resin is usually 0.01 to 5 **µ**m, preferably around 0.03 to 1 **µ**m. Within the above range, the plastic film is less likely to degrade in heat resistance, solvent resistance and flexibility, which is preferred.

Examples of a method of depositing or plating an electrically conductive substance include vacuum deposition, sputtering, ion plating, chemical deposition, spray pyrolysis, chemical plating, and electric plating methods.

The thickness of the electrically-conductive material layer is generally from 0.002 to 1 µm, preferably from 0.005 to 0.5 µm. Within the above range, the plastic film is less likely to degrade in heat resistance, solvent resistance and flexibility, which is preferred.

As the kneading-type antistatic agent, the aforementioned antistatic agent is appropriately used. The amount of the kneading-type antistatic agent to be blended is 20% by weight or less, preferably in a range of 0.05 to 10% by weight, based on the total weight of a plastic film. Within the above range, the plastic film is less likely to degrade in heat resistance, solvent resistance and flexibility, which is preferred. A kneading method is not particularly limited as far as it is a method by which the antistatic agent can be uniformly mixed into a resin used in a plastic film, but for example, a heating roll, a Banbury mixer, a pressure kneader, and a biaxial kneading machine are used.

If necessary, in the pressure sensitive adhesive sheet and the surface protecting film of the present invention, a separator can be bonded onto a surface of a pressure-sensitive adhesive layer for the purpose of protecting a pressure-sensitive adhesive surface.

The material used to form the separator may be paper or a plastic film. The plastic film is preferably used because of its good surface smoothness. Such a film may be of any type capable of protecting the pressure-sensitive adhesive layer, and examples thereof include a polyethylene film, a polypropylene film, a polybutene film, a polybutadiene film, a polymethylpentene film, a polyvinyl chloride film, a vinyl chloride copolymer film, a polyethylene terephthalate film, a polybutylene terephthalate film, a polyurethane film, an ethylene-vinyl acetate copolymer film and the like.

The separator generally has a thickness of about 5 to 200 µm, and preferably about 10 to 100 µm. Within the above range, good workability can be obtained in bonding to the pressure-sensitive adhesive layer and in peeling from the pressure-sensitive adhesive layer, which is preferred. If necessary, the separator may be subjected to release and antifouling treatment with a silicone, fluoride, long-chain alkyl, or fatty acid amide release agent or silica powder or subjected to antistatic treatment of coating type, kneading type, vapor-deposition type, or the like.

The pressure-sensitive adhesive sheet of the present invention (including the case for use in a surface protecting film) preferably has a potential (peeling electrification voltage: kV, absolute value) generated on the surface of a polarizing plate of the pressure-sensitive adhesive layer used in the pressure-sensitive adhesive sheet, which is preferably 0.5 kV or less, more preferably 0.4 kV or less, and still more preferably 0.3 kV or less, when peeled off under the conditions of 23°C and 50%RH, a peeling angle of 150° and a peeling rate of 30 m/minute (high-speed peeling). It is not preferred that the peeling electrification voltage is more than 0.5 kV since damage of a liquid crystal driver or the like may occur.

In the pressure-sensitive adhesive sheet of the present invention (including the case for use in a surface protecting film), the pressure-sensitive adhesive layer used to form the pressure-sensitive adhesive sheet preferably has a 180° peel adhesive power (at a tensile speed of 0.3 m/minute: low-speed peeling) of 0.05 N/25 mm or more, more preferably 0.05 to 0.3 N/25 mm, and still more preferably 0.05 to 0.2 N/25 mm, to a polarizing plate at 23°C and 50%RH. It is not preferred that the peel adhesive power is less than 0.05 N/25 mm (at a tensile speed of 0.3 m/minute: low-speed peeling) since the protecting film may be easily peel off from the adherend even in other processes than the peeling step and lifting may occur, resulting in deterioration of protective function to the adherend.

In the pressure-sensitive adhesive sheet of the present invention (including the case for use in a surface protecting film), the pressure-sensitive adhesive layer used to form the pressure-sensitive adhesive sheet preferably has a 180° peel adhesive power (at a tensile speed of 30 m/minute: high-speed peeling) of 1.5 N/25 mm or less, more preferably 0.1 to 1.3 N/25 mm, and particularly preferably 0.1 to 1.0 N/25 mm, to a polarizing plate at 23°C and 50%RH. It is not preferred that the peel adhesive power is more than 1.5 N/25 mm (at a tensile speed of 30 m/minute: high-speed peeling) since the protecting film may not be easily peel off from the adherend and the peeling workability may be low when the protecting film becomes unnecessary, and also the adherend is damaged by the peeling step.

The pressure-sensitive adhesive composition, the pressure-sensitive adhesive layer and the pressure-sensitive adhesive sheets (including a surface protecting layer or the like) using the present invention are used, particularly, in plastic products on which static electricity is easily generated in case of using an antistatic agent. Therefore, they are very useful in optical and electronic components-related technical fields where electrification is a serious problem. In particular, a surface protecting film used in surface protection, produced with the pressure-sensitive adhesive sheet of the present invention, is useful since it can be used for the purpose of protecting an optical member surface such as a polarizing plate, a wave plate, a retardation plate, an optical compensation film, a reflective sheet, or a brightness enhancement film.

### EXAMPLES

Examples which specifically show a construction and effect of the present invention will be described below. However, the present invention is not limited thereto. Evaluation items in Examples were measured by the following procedures.

### <Measurement of acid value>

An acid value was measured using an automatically titrating apparatus (COM-550 manufactured by HIRANUMA SANGYO Co., Ltd.), and was obtained by the following equation.

$A = \left\{\left(Y-X\right)\times f\times 5.611\right\} / M$
A; Acid value
Y; Titration amount of sample solution (ml)
X; Titration amount of solution of only 50g of mixed solvent (ml)
f; Factor of titration solution
M; Weight of polymer sample (g)

Measurement conditions are as follows:
Sample solution: About 0.5g of a polymer sample was dissolved in 50g of a mixed solvent (toluene/2-propanol/distilled water= 50/49.5/0.5, weight ratio) to obtain a sample solution.
Titration solution: 0.1N 2-propanolic potassium hydroxide solution (for petroleum product neutralization value test manufactured by Wako Pure Chemical Industries, Ltd.)
Electrode: glass electrode; GE-101, comparative electrode; RE-201, Measurement mode: petroleum product neutralization value test 1

### <Measurement of Weight Average Molecular Weight>

A weight average molecular weight was measured using a GPC apparatus (HLC-8220GPC manufactured by Tosoh Corporation). Measuring conditions are as follows.

Sample concentration: 0.2wt% (THF solution)
Sample injection amount: 10**µ**l
Eluent: THF
Flow rate: 0.6ml/min
Measuring temperature: 40°C
Column:
Sample column;
TSKguard column SuperHZ-H(1 column)+TSK gel Super HZM-H(2 columns)
Reference column;
TSK gel SuperH-RC(1 column)
Detector: Refractive index detector (RI)
A molecular weight was obtained in terms of polystyrene.

### <Theoretical Value of Glass Transition Temperature>

A glass transition temperature Tg (°C) was determined by the following equation using the following reference values as a glass transition temperature Tgn (°C) of a homopolymer of each monomer.

$1 / \left(Tg+273\right) = Σ ⁢ \left[Wn/\left(Tgn+273\right)\right]$
[where Tg (°C) represents a glass transition temperature of a copolymer, Wn (-) represents a weight fraction of each monomer, Tgn (°C) represents a glass transition temperature of a homopolymer of each monomer, and n represents a kind of each monomer]
Reference values:
2-ethylhexyl acrylate: -70°C
2-hydroxyethyl acrylate: -15°C

For the literature values, reference was made to "Acryl Jushi no Gosei Sekkei to Shin-Yoto Tenkai (Synthesis/Design of Acrylic Resins and Development of New Applications" (published by Chuo Keiei Kaihatsu Center Shuppan-bu)

### <Measurement of Glass Transition Temperature>

A glass transition temperature Tg (°C) was determined by the method described below using a dynamic viscoelasticity measurement system (ARES manufactured by Rheometric Scientific Inc.).

Sheets of a (meth)acryl-based polymer having a thickness of 20 µm were laminated into a thickness of about 2 mm, and this was punched into ϕ7.9 mm to prepare a cylindrical pellet, and this was used as a sample for measuring a glass transition temperature.

The measuring sample was fixed on a jig of a ϕ7.9 mm parallel plate and temperature dependency of loss elastic modulus G" was measured using the dynamic viscoelasticity measuring apparatus, and a temperature at which the resulting G" curve became a maximum was adopted as a glass transition temperature (°C).

Measuring conditions are as follows.
Measurement: shear mode
Temperature range: -70°C to 150°C
Temperature raising rate: 5°C/min
Frequency: 1 Hz

### <Analysis of ionic liquid structure>

Structural analysis of an ionic liquid was performed by NMR measurement, XRF measurement, and FT-IR measurement.

### [NMR measurement]

NMR measurement was performed under the following measuring condition using a nuclear magnetic resonance apparatus (EX-400 manufactured by JEOL. Ltd.).
Observation frequency: 400 MHz (¹H), 100MHz (¹³C)
Measuring solvent: acetone-d₆
Measuring temperature :23°C

### [XRF measurement]

XRF measurement was performed under the following measuring condition using a scanning-type fluorescent X-ray analyzing apparatus (ZSX-100e manufactured by Rigaku Corporation).
Measuring method: filter paper method
X-ray source: Rh

### [FT-IR measurement]

FT-IR measurement was performed under the following measuring condition using an infrared spectrophotometer (Magna-560 manufactured by Nicolet).
Measuring method: ATR method
Detector: DTGS
Resolution: 4.0 cm⁻¹
Accumulation times: 64

### <Measurement of Peeling Electrification Voltage>

The pressure-sensitive adhesive sheet was cut into a piece with a size of 70 mm in width and 130 mm in length, and the separator was peeled off. Using a hand roller, the piece was then press-bonded to the surface of a TAC polarizing plate (SEG1423DU Polarizing Plate manufactured by NITTO DENKO CORPORATION, 70 mm in width, 100 mm in length), which had been bonded to an acrylic plate (2 mm in thickness, 70 mm in width, 100 mm in length) having undergone static elimination in advance, in such a manner that one end of the piece protruded 30 mm out of the plate.

The resulting sample was allowed to stand at 23°C and 50%RH for a day and then set at the predetermined location as shown in Fig. 1. The one end protruding 30 mm was fixed to an automatic winder, and the piece was peeled off at a peeling angle of 150°C and a peeling rate of 30 m/minute(high-speed peeling). The potential(peeling electrification voltage:kV, absolute value) generated on the surface of the polarizing plate in this process was measured using a potential meter (KSD-0103, manufactured by KASUGA ELECTRIC WORKS LTD.) fixed above the center of the polarizing plate. The measurement was performed in an environment at 23°C and 50%RH.

### <Measurement of Adhesive power>

A TAC polarizing plate (SEG1423DU Polarizing Plate manufactured by NITTO DENKO CORPORATION, 70 mm in width, 100 mm in length) was allowed to stand in an environment at 23°C and 50%RH for 24 hours, and then a 25 mm wide, 100 mm long, cut piece of the pressure-sensitive adhesive sheet was laminated to the above adherend under a pressure of 0.25 MPa at a rate of 0.3 m/minute, so that an evaluation sample was obtained.

After the lamination, the sample was allowed to stand in an environment at 23°C and 50%RH for 30 minutes, and then using a universal tensile tester, the adhesive power (N/25 mm) was measured when the sheet was peeled off at a peeling rate of 0.3 m/minute (low-speed peeling) or 30 m/minute (high-speed peeling) and a peeling angle of 180°. The measurement was performed in an environment at 23°C and 50%RH.

### <Evaluation of Staining Properties>

The prepared pressure-sensitive adhesive sheet was cut into a piece with a size of 50 mm in width, 80 mm in length, and the separator was peeled off. The piece was then press-bonded to a cut piece of a TAC polarizing plate (SEG1423DU Polarizing Plate manufactured by NITTO DENKO CORPORATION, 70 mm in width, 100 mm in length) while generating bubbles, so that an evaluation sample was obtained.

After the evaluation sample was allowed to stand for a month, the pressure-sensitive adhesive sheet was peeled off from the adherend by hand, the bubble trace of the surface of the adherend was visually observed. The evaluation criteria were as follows.
O: Cases where no bubbles was observed.
x: Cases where bubbles was observed.

### <Confirmation of Separator Peel Adhesive power (Adhesion) Temporal Stability>

The prepared pressure-sensitive adhesive sheet was cut into a piece with a size of 50 mm in width and 150 mm in length, and then using a universal tensile tester, the peel strength (N/50 mm) was measured when the separator was peeled off at a peeling rate of 0.3 m/minute and a peeling angle of 180°. The evaluation criteria were as follows. OO: Cases where separator peel strength is less than 1.5 times as initial separator peel strength when one month has passed since the production of the pressure-sensitive adhesive sheet.
O: Cases where separator peel strength is 1.5 times or more as initial separator peel strength, although there is no practical problem when use.
Δ: Cases where separator peel strength is 5 times or more as initial separator peel strength, and there is a practical problem when use.

### <Preparation of (Meth)acryl-Based Polymer (A)>

A four-neck flask equipped with a stirring wing, a thermometer, a nitrogen gas introducing tube and a condenser was charged with 200 parts by weight of 2-ethylhexyl acrylate, 8 parts by weight of 2-hydroxyethyl acrylate, 0.4 part by weight of 2,2'-azobisisobutyronitrile as a polymerization initiator and 312 parts by weight of ethyl acetate, and a nitrogen gas was introduced while mildly stirring, and then a polymerization reaction was performed for 6 hours while maintaining a liquid temperature in a flask at about 65°C to prepare a solution (40% by weight) of an acryl-based polymer (A). This acryl-based polymer (A) had a weight average molecular weight of 540,000, a glass transition temperature (Tg) of -68°C, and an acid value of 0.0.

### <Preparation of Oxyalkylene Chain-Containing (Meth)acryl-Based Polymer (B)>

A four-neck flask equipped with a stirring wing, a thermometer, a nitrogen gas introducing tube and a condenser was charged with 120 parts by weight of toluene and 10 parts by weight of 2,2'-azobisisobutyronitrile, and a nitrogen gas was introduced while mildly stirring and a liquid temperature was adjusted to 75°C. 50 parts by weight of 2-ethylhexyl acrylate, 50 parts by weight of ethoxy-diethylene glycol acrylate, and 10 parts by weight of **α**-methylstyrene dimer were gradually added over 2 hours while maintaining a liquid temperature in a flask at about 75°C, and then a polymerization reaction was performed. Furthermore, a polymerization reaction was performed for one hour while maintaining a liquid temperature at 75°C to prepare a solution (42% by weight) of a (meth)acryl-based polymer (B). The solution was dried at 130°C for one hour to obtain an oxyalkylene chain-containing (meth)acryl-based polymer (B) (solid content of 100% by weight) of content of an ethylene glycol group-containing acylate of 50% by weight. This acryl-based polymer (B) had a weight average molecular weight (Mn) of 5,000.

### <Preparation of Ionic Liquid (1)>

A 20% by weight aqueous solution prepared by diluting 10 parts by weight of 1-butyl-3-methylpyridium chloride (manufactured by Wako Pure Chemical Industries, Ltd.) with distilled water was added to four-neck flask equipped with a stirring wing, a thermometer and a condenser, and an aqueous solution prepared by diluting 19 parts by weight of lithium bis(trifluoromethanesulfonyl)imide (manufactured by Kishida Chemical Co., Ltd.) to 20% by weight with distilled water was gradually added while rotating a stirring wing. After addition, stirring was continued at 25°C for 2 hours, followed by being left to stand for 12 hours. Then, the supernatant was removed to obtain a liquid product.

The resulting liquid product was washed three times with 200 parts by weight of distilled water, and dried for 2 hours under the environment of 110°C to obtain 20 parts by weight of an ionic liquid (1) which is liquid at 25°C.

NMR (¹H, ¹³C) measurement of, FT-IR measurement of and XRF measurement of the resulting ionic liquid (1) were performed, and 1-butyl-3-methylpyridium bis(trifluoromethanesulfonyl)imide was identified and confirmed.

### <Preparation of Antistatic-Treated Film>

Diluted was 10 Parts by weight of an antistatic agent (Microsolver RMd-142, manufactured by Solvex Co., Ltd., containing, as main components, tin oxide and a polyester resin) with a mixed solvent containing 30 parts by weight of water and 70 parts by weight of methanol to prepare an antistatic agent solution.

The resulting antistatic agent solution was coated on a polyethylene terephthalate (PET) film (having a thickness of 38 µm) using a Meyer bar, followed by drying at 130°C for 1 minute to remove a solvent, to form an antistatic layer (having a thickness of 0.2 µm), and thus an antistatic-treated film was prepared.

### <Example I-1>

### [Preparation of Pressure-Sensitive Adhesive Composition]

The above acryl-based polymer (A) solution (40% by weight) was diluted to 20% by weight with ethyl acetate. To 100 parts by weight of the resulting solution were added 0.6 part by weight of a solution prepared by diluting main chain type A (SF8427, manufactured by Dow Corning Toray Co., Ltd.) as an organosiloxane having a polyoxyalkylene chain in a main chain to 10% with ethyl acetate, 0.8 part by weight of trimethylolpropane/tolylene diisocyanate (COLONATE L, manufactured by Nippon Polyurethane Industry Co., Ltd., 75% by weight) as a crosslinking agent and 0.4 part by weight of tin dibutyl dilaurate (1% by weight of ethyl acetate solution) as a crosslinking catalyst, followed by mixing and stirring to prepare an acryl-based pressure-sensitive adhesive solution (1).

### [Preparation of Pressure-sensitive Adhesive Sheet]

The acryl-based pressure-sensitive adhesive solution (1) was applied to the opposite surface of the above antistatic-treated film from its antistatic-treated surface and heated at 130°C for 2 minutes to form a 15 µm thick pressure-sensitive adhesive layer. A polyethylene terephthalate film (having a thickness of 25 µm) with one side treated with silicone was then provided, and the silicone-treated surface of the polyethylene terephthalate film was bonded to the surface of the pressure-sensitive adhesive layer to prepare a pressure-sensitive adhesive sheet.

### <Example I-2>

### [Preparation of Pressure-Sensitive Adhesive Solution]

In the same manner as in Example I-1, except that a main chain type B (X-22-4272, manufactured by Shin-Etsu Chemical Co., Ltd.: polyoxyalkylene chain-terminated hydroxyl group) was used as the organopolysiloxane having a polyoxyalkylene chain in a main chain in place of the main chain type A, an acryl-based pressure-sensitive adhesive solution (2) was prepared.

### [Preparation of Pressure-sensitive Adhesive Sheet]

In the same manner as in Example I-1, except that the acryl-based pressure-sensitive adhesive solution (2) was used, a pressure-sensitive adhesive sheet was prepared.

<Example I-3>

### [Preparation of Pressure-Sensitive Adhesive Solution]

In the same manner as in Example I-1, except that a main chain type C (KF6004, manufactured by Shin-Etsu Chemical Co., Ltd.: polyoxyalkylene chain-terminated alkoxy group) was used as the organopolysiloxane having a polyoxyalkylene chain in a main chain in place of the main chain type A, and 0.53 part by weight of trimethylolpropane/tolylene diisocyanate (COLONATE L, manufactured by Nippon Polyurethane Industry Co., Ltd., 75% by weight) was used as a crosslinking agent, an acryl-based pressure-sensitive adhesive solution (3) was prepared.

### [Preparation of Pressure-sensitive Adhesive Sheet]

In the same manner as in Example I-1, except that the acryl-based pressure-sensitive adhesive solution (3) was used, a pressure-sensitive adhesive sheet was prepared.

### <Example I-4>

### [Preparation of Pressure-Sensitive Adhesive Solution]

In the same manner as in Example I-3, except that 0.2 part by weight of a solution prepared by diluting a polyoxyalkylene chain-containing compound containing no organopolysiloxane (ADEKA Pluronic 17R-4, manufactured by Asahi Denka Co., Ltd.) to 10% with ethyl acetate was further used, an acryl-based pressure-sensitive adhesive solution (4) was prepared.

### [Preparation of Pressure-sensitive Adhesive Sheet]

In the same manner as in Example I-1, except that the acryl-based pressure-sensitive adhesive solution (4) was used, a pressure-sensitive adhesive sheet was prepared.

### <Comparative Example I-1>

### [Preparation of Pressure-Sensitive Adhesive Solution]

In the same manner as in Example I-1, except that the organopolysiloxane having a polyoxyalkylene chain in a main chain was not used, an acryl-based pressure-sensitive adhesive solution (5) was prepared.

### [Preparation of Pressure-sensitive Adhesive Sheet]

In the same manner as in Example I-1, except that the acryl-based pressure-sensitive adhesive solution (5) was used, a pressure-sensitive adhesive sheet was prepared.

### <Comparative Example I-2>

### [Preparation of Pressure-Sensitive Adhesive Solution]

In the same manner as in Example I-1, except that an organopolysiloxane side chain type D having a polyoxyalkylene chain in a side chain (KF355A, manufactured by Shin-Etsu Chemical Co., Ltd.) was used in place of the organopolysiloxane main chain type A having a polyoxyalkylene chain in a main chain, an acryl-based pressure-sensitive adhesive solution (6) was prepared.

### [Preparation of Pressure-sensitive Adhesive Sheet]

In the same manner as in Example I-1, except that the acryl-based pressure-sensitive adhesive solution (6) was used, a pressure-sensitive adhesive sheet was prepared.

### <Comparative Example I-3>

### [Preparation of Pressure-Sensitive Adhesive Solution]

In the same manner as in Example I-1, except that 2 parts by weight of a solution prepared by diluting an organopolysiloxane side chain type D having a polyoxyalkylene chain in a side chain (KF355A, manufactured by Shin-Etsu Chemical Co., Ltd.) to 10% with ethyl acetate was used in place of the organopolysiloxane main chain type A having a polyoxyalkylene chain in a main chain, an acryl-based pressure-sensitive adhesive solution (7) was prepared.

### [Preparation of Pressure-sensitive Adhesive Sheet]

In the same manner as in Example I-1, except that the acryl-based pressure-sensitive adhesive solution (7) was used, a pressure-sensitive adhesive sheet was prepared.

According to the above methods, the prepared pressure-sensitive adhesive sheets were measured for adhesive power at low speed (peeling rate of 0.3 m/minute) and adhesive power at high speed (peeling rate of 30 m/minute) and evaluated for staining properties. The obtained results are shown in Table 1.

**[Table 1]**

| Formulation and evaluation results | Composition of pressure-sensitive adhesive | | Low-speed adhesive power <0.3 m/minute> [N/25 mm] | High-speed adhesive power <30 m/minute> [N/25 mm] | Staining properties [-] | Separator peel adhesive power temporal stability [-] |
|---|---|---|---|---|---|---|
| | Organopolysiloxane | Polyoxyalkylene chain-containing compound | | | | |
| Example I-1 | Main chain type A | - | 0.07 | 0.71 | O | O |
| Example I-2 | Main chain type B | - | 0.06 | 0.63 | O | O |
| Example I-3 | Main chain type C | - | 0.08 | 0.60 | O | OO |
| Example I-4 | Main chain type C | ADEKA Pluronic 17R-4 | 0.06 | 0.52 | O | OO |
| Comparative Example I-1 | - | - | 0.18 | 2.80 | O | OO |
| Comparative Example I-2 | Side chain type D | - | 0.15 | 1.90 | O | OO |
| Comparative Example I-3 | Side chain type D | - | 0.09 | 0.80 | × | OO |

The results in Table 1 revealed that when an organopolysiloxane having an oxyalkylene chain in a siloxane moiety as a main chain (specific organopolysiloxane) was used, the adhesive power at high-speed peeling can be adjusted within a desired range, and thus reconciling removability and low staining properties in all the examples.

In contrast, since a specific organopolysiloxane was not added in Comparative Example I-1, whereas, an organopolysiloxane having an oxyalkylene chain in a side chain in place of a main chain was used in Comparative Example I-2, the adhesive power at high-speed peeling was high in both cases and could not be adjusted within a desired range. In Comparative Example I-3 in which the addition amount of the organopolysiloxane having an oxyalkylene chain in a side chain was increased, the adhesive power at high-speed peeling could be adjusted within a desired range, but staining properties are inferior.

### <Example II-1>

### [Preparation of Pressure-Sensitive Adhesive Solution]

The above acryl-based polymer (A) solution (40% by weight) was diluted to 20% by weight with ethyl acetate. To 100 parts by weight of the resulting solution were added 0.4 part by weight of a solution prepared by diluting a main chain type A (SF8427, manufactured by Dow Corning Toray Co., Ltd.) as an organopolysiloxane having a polyoxyalkylene chain in a main chain to 10% with ethyl acetate, 0.2 part by weight of a solution prepared by diluting bis(trifluoromethanesulfonyl) imidolithium (manufactured by Tokyo Kasei Kogyo Co., Ltd.) as an alkali metal salt to 10% with ethyl acetate, 0.3 part by weight of an isocyanurate of hexamethylene diisocyanate (COLONATE HX manufactured by Nippon Polyurethane Industry Co., Ltd., 100% by weight) as a crosslinking agent and 0.4 part by weight of dibutyltin dilaurate (a 1% by weight of ethyl acetate solution) as a crosslinking catalyst, followed by mixing and stirring to prepare an acryl-based pressure-sensitive adhesive solution (8).

### [Preparation of Pressure-sensitive Adhesive Sheet]

The acryl-based pressure-sensitive adhesive solution (8) was applied to the opposite surface of the above antistatic-treated film from its antistatic-treated surface and heated at 130°C for 2 minutes to form a 15 µm thick pressure-sensitive adhesive layer. A polyethylene terephthalate film (having a thickness of 25 µm) with one side treated with silicone was then provided, and the silicone-treated surface of the polyethylene terephthalate film was bonded to the surface of the pressure-sensitive adhesive layer to prepare a pressure-sensitive adhesive sheet.

### <Example II-2>

### [Preparation of Pressure-Sensitive Adhesive Solution]

In the same manner as in Example II-1, except that a main chain type B (KF6004, manufactured by Shin-Etsu Chemical Co., Ltd.: polyoxyalkylene chain-terminated alkoxy group) was used as the organopolysiloxane having a polyoxyalkylene chain in a main chain in place of the main chain type A, an acryl-based pressure-sensitive adhesive solution (9) was prepared.

### [Preparation of Pressure-sensitive Adhesive Sheet]

In the same manner as in Example II-1, except that the acryl-based pressure-sensitive adhesive solution (9) was used, a pressure-sensitive adhesive sheet was prepared.

### <Example II-3>

### [Preparation of Pressure-Sensitive Adhesive Solution]

In the same manner as in Example II-1, except that a main chain type C (X-22-4272, manufactured by Shin-Etsu Chemical Co., Ltd.: polyoxyalkylene chain-terminated hyroxyl group) was used as the organopolysiloxane having a polyoxyalkylene chain in a main chain in place of the main chain type A, an acryl-based pressure-sensitive adhesive solution (10) was prepared.

### [Preparation of Pressure-sensitive Adhesive Sheet]

In the same manner as in Example II-1, except that the acryl-based pressure-sensitive adhesive solution (10) was used, a pressure-sensitive adhesive sheet was prepared.

### <Example II-4>

### [Preparation of Pressure-Sensitive Adhesive Solution]

In the same manner as in Example II-1, except that a main chain type B (KF6004, manufactured by Shin-Etsu Chemical Co., Ltd.: polyoxyalkylene chain-terminated alkoxy group) was used as the organopolysiloxane having a polyoxyalkylene chain in a main chain in place of the main chain type A, and the above ionic liquid (1) was used in place of bis(trifluoromethanesulfonyl) imidolithium, an acryl-based pressure-sensitive adhesive solution (11) was prepared.

### [Preparation of Pressure-sensitive Adhesive Sheet]

In the same manner as in Example II-1, except that the acryl-based pressure-sensitive adhesive solution (11) was used, a pressure-sensitive adhesive sheet was prepared.

### <Example II-5>

### [Preparation of Pressure-Sensitive Adhesive Solution]

In the same manner as in Example II-1, except that a main chain type C (X-22-4272, manufactured by Shin-Etsu Chemical Co., Ltd.: polyoxyalkylene chain-terminated hydroxyl group) was used as the organopolysiloxane having a polyoxyalkylene chain in a main chain in place of the main chain type A, and the above ionic liquid (1) was used in place of bis(trifluoromethanesulfonyl) imidolithium, an acryl-based pressure-sensitive adhesive solution (12) was prepared.

### [Preparation of Pressure-sensitive Adhesive Sheet]

In the same manner as in Example II-1, except that the acryl-based pressure-sensitive adhesive solution (12) was used, a pressure-sensitive adhesive sheet was prepared.

### <Example II-6>

### [Preparation of Pressure-Sensitive Adhesive Solution]

In the same manner as in Example II-2, except that 0.02 part by weight of a polyoxyalkylene chain-containing compound containing no organopolysiloxane (ADEKA Pluronic 17R-4, manufactured by ADEKA Corporation) was further used, an acryl-based pressure-sensitive adhesive solution (13) was prepared.

### [Preparation of Pressure-sensitive Adhesive Sheet]

In the same manner as in Example II-1, except that the acryl-based pressure-sensitive adhesive solution (13) was used, a pressure-sensitive adhesive sheet was prepared.

### <Example II-7>

### [Preparation of Pressure-Sensitive Adhesive Solution]

In the same manner as in Example II-1, except that bis(trifluoromethanesulfonyl) imidolithium (manufactured by Tokyo Kasei Kogyo Co., Ltd.) was not used, an acryl-based pressure-sensitive adhesive solution (14) was prepared.

### [Preparation of Pressure-sensitive Adhesive Sheet]

In the same manner as in Example II-1, except that the acryl-based pressure-sensitive adhesive solution (14) was used, a pressure-sensitive adhesive sheet was prepared.

### <Example II-8>

### [Preparation of Pressure-Sensitive Adhesive Solution]

In the same manner as in Example II-2, except that 0.1 part by weight of the above oxyalkylene chain-containing (meth)acryl-based polymer containing no organopolysiloxane was further used, an acryl-based pressure-sensitive adhesive solution (15) was prepared.

### [Preparation of Pressure-sensitive Adhesive Sheet]

In the same manner as in Example II-1, except that the acryl-based pressure-sensitive adhesive solution (15) was used, a pressure-sensitive adhesive sheet was prepared.

### <Comparative Example II-1>

### [Preparation of Pressure-Sensitive Adhesive Solution]

In the same manner as in Example II-1, except that an organopolysiloxane side chain type D having a polyoxyalkylene chain in a side chain (KF355A, manufactured by Shin-Etsu Chemical Co., Ltd.) was used in place of the organopolysiloxane main chain type A having a polyoxyalkylene chain in a main chain, an acryl-based pressure-sensitive adhesive solution (16) was prepared.

### [Preparation of Pressure-sensitive Adhesive Sheet]

In the same manner as in Example II-1, except that the acryl-based pressure-sensitive adhesive solution (16) was used, a pressure-sensitive adhesive sheet was prepared.

### <Comparative Example II-2>

### [Preparation of Pressure-Sensitive Adhesive Solution]

In the same manner as in Example II-1, except that an organopolysiloxane side chain type E having a polyoxyalkylene chain in a side chain (KF351A, manufactured by Shin-Etsu Chemical Co., Ltd.) was used in place of the organopolysiloxane main chain type A having a polyoxyalkylene chain in a main chain, an acryl-based pressure-sensitive adhesive solution (17) was prepared.

### [Preparation of Pressure-sensitive Adhesive Sheet]

In the same manner as in Example II-1, except that the acryl-based pressure-sensitive adhesive solution (17) was used, a pressure-sensitive adhesive sheet was prepared.

### <Comparative Example II-3>

### [Preparation of Pressure-Sensitive Adhesive Solution]

In the same manner as in Example II-1, except that an organopolysiloxane side chain type F having a polyoxyalkylene chain in a side chain (KF354L, manufactured by Shin-Etsu Chemical Co., Ltd.) was used in place of the organopolysiloxane main chain type A having a polyoxyalkylene chain in a main chain, an acryl-based pressure-sensitive adhesive solution (18) was prepared.

### [Preparation of Pressure-sensitive Adhesive Sheet]

In the same manner as in Example II-1, except that the acryl-based pressure-sensitive adhesive solution (18) was used, a pressure-sensitive adhesive sheet was prepared.

### <Comparative Example II-4>

### [Preparation of Pressure-Sensitive Adhesive Solution]

In the same manner as in Example II-1, except that an organopolysiloxane side chain type G having a polyoxyalkylene chain in a side chain (KF353, manufactured by Shin-Etsu Chemical Co., Ltd.) was used in place of the organopolysiloxane main chain type A having a polyoxyalkylene chain in a main chain, and the above ionic liquid (1) was used as the ionic liquid in place of bis(trifluoromethanesulfonyl) imidolithium, an acryl-based pressure-sensitive adhesive solution (19) was prepared.

### [Preparation of Pressure-sensitive Adhesive Sheet]

In the same manner as in Example II-1, except that the acryl-based pressure-sensitive adhesive solution (19) was used, a pressure-sensitive adhesive sheet was prepared.

### <Comparative Example II-5>

### [Preparation of Pressure-Sensitive Adhesive Solution]

In the same manner as in Example II-1, except that the organopolysiloxane having a polyoxyalkylene chain was not used, an acryl-based pressure-sensitive adhesive solution (20) was prepared.

### [Preparation of Pressure-sensitive Adhesive Sheet]

In the same manner as in Example II-1, except that the acryl-based pressure-sensitive adhesive solution (20) was used, a pressure-sensitive adhesive sheet was prepared.

### <Comparative Example II-6>

### [Preparation of Pressure-Sensitive Adhesive Solution]

In the same manner as in Example II-4, except that the organopolysiloxane having a polyoxyalkylene chain was not used, an acryl-based pressure-sensitive adhesive solution (21) was prepared.

### [Preparation of Pressure-sensitive Adhesive Sheet]

In the same manner as in Example II-1, except that the acryl-based pressure-sensitive adhesive solution (21) was used, a pressure-sensitive adhesive sheet was prepared.

According to the above methods, the prepared pressure-sensitive adhesive sheets were measured for peeling electrification voltage and high-speed adhesive power (peeling rate: 30 m/minute) and evaluated for staining properties. The obtained results are shown in Table 2.

**[Table 2]**

| Formulation and evaluation results | Composition of pressure-sensitive adhesive | | | Peeling electrificat ion voltage (kV: absolute value) | High-speed adhesive power <30 m/minute> [N/25 mm] | Staining properties [-] | Separator peel adhesive power temporal stability [-] |
|---|---|---|---|---|---|---|---|
| | Organopolysiloxane | Polyoxyalkylene chain-containing compound | Ionic compound | | | | |
| Example II-1 | Main chain type A | - | Alkali metal salt | 0.0 | 0.40 | O | O |
| Example II-2 | Main chain type B | - | Alkali metal salt | 0.0 | 0.27 | O | OO |
| Example II-3 | Main chain type C | - | Alkali metal salt | 0.0 | 0.40 | O | OO |
| Example II-4 | Main chain type B | - | Ionic liquid | 0.0 | 0.28 | O | OO |
| Example II-5 | Main chain type C | - | Ionic liquid | 0.4 | 0.39 | O | OO |
| Example II-6 | Main chain type B | ADEKA Pluronic 17R-4 | Alkali metal salt | 0.0 | 0.15 | O | OO |
| Example II-7 | Main chain type A | - | - | 2.1 | 0.23 | O | O |
| Example II-8 | Main chain type B | Acryl-based polymer B | Alkali metal salt | 0.0 | 0.25 | O | OO |
| Comparative Example II-1 | Side chain type D | - | Alkali metal salt | 0.3 | 1.85 | O | OO |
| Comparative Example II-2 | Side chain type E | - | Alkali metal salt | 0.0 | 1.95 | O | OO |
| Comparative Example II-3 | Side chain type F | - | Alkali metal salt | 0.1 | 2.15 | O | OO |
| Comparative Example II-4 | Side chain type G | - | Ionic liquid | 0.3 | 1.90 | O | OO |
| Comparative Example II-5 | - | - | Alkali metal salt | 0.0 | 4.20 | × | OO |
| Comparative Example II-6 | - | - | Ionic liquid | 0.6 | 2.40 | × | OO |

The results in Table 2 revealed that when a pressure-sensitive adhesive composition containing an organopolysiloxane having an oxyalkylene chain in a siloxane moiety as a main chain (specific organopolysiloxane) and an ionic compound was used in Examples II-1 to II-6 and II-8, the absolute value of a peeling electrification voltage was suppressed to a low value of 0.4 kV or less and also the adhesive power at high-speed peeling can be adjusted within a desired range, and thus reconciling antistatic properties and removability. It could be also confirmed that they have low staining properties. In Example II-7, since an ionic compound as an antistatic agent was not added, the peeling electrification voltage increased. However, the adhesive power at high-speed peeling could be adjusted within a desired range and other characteristics were also satisfactory.

In contrast, since an organopolysiloxane having an oxyalkylene chain in a side chain in place of a main chain was used in Comparative Examples II-1 to II-4, the peeling electrification voltage satisfies a desired value. However, it became apparent that the adhesive power at high-speed peeling increases and removability is inferior. Since a specific organopolysiloxane was not added in Comparative Example II-5, an increase in adhesive power at high-speed peeling and staining were recognized. In Comparative Example II-6, it becomes apparent that the peeling electrification voltage and adhesive power at high-speed peeling increase, and thus it is difficult to reconcile antistatic properties and removability, and staining was recogneized.

### <Example III-1>

### [Preparation of Pressure-Sensitive Adhesive Solution]

The above acryl-based polymer (A) solution (40% by weight) was diluted to 20% by weight with ethyl acetate. To 100 parts by weight of the resulting solution were added 0.4 part by weight of a solution prepared by diluting a main chain type A (SF8427, manufactured by Dow Corning Toray Co., Ltd., polyoxyalkylene chain-terminated hydroxyl group) as an organopolysiloxane having a polyoxyalkylene chain in a main chain to 10% by weight with ethyl acetate, 0.2 part by weight of a solution prepared by diluting bis(trifluoromethanesulfonyl) imidolithium (manufactured by Tokyo Kasei Kogyo Co., Ltd.) as an alkali metal salt to 10% with ethyl acetate, 0.8 part by weight of trimethylolpropane/tolylene diisocyanate (COLONATE L manufactured by Nippon Polyurethane Industry Co., Ltd., 75% by weight) as a crosslinking agent and 0.4 part by weight of dibutyltin dilaurate (a 1% by weight ethyl acetate solution) as a crosslinking catalyst, followed by mixing and stirring to prepare an acryl-based pressure-sensitive adhesive solution (22).

### [Preparation of Pressure-sensitive Adhesive Sheet]

The acryl-based pressure-sensitive adhesive solution (22) was applied to the opposite surface of the above antistatic-treated film from its antistatic-treated surface and heated at 130°C for 2 minutes to form a 15 µm thick pressure-sensitive adhesive layer. A polyethylene terephthalate film (having a thickness of 25 µm) with one side treated with silicone was then provided, and the silicone-treated surface of the polyethylene terephthalate film was bonded to the surface of the pressure-sensitive adhesive layer to prepare a pressure-sensitive adhesive sheet.

### <Example III-2>

### [Preparation of Pressure-Sensitive Adhesive Solution]

In the same manner as in Example III-1, except that 0.4 part by weight of a solution prepared by diluting a main chain type B (KF6004, manufactured by Shin-Etsu Chemical Co., Ltd.: polyoxyalkylene chain-terminated alkoxy group) to 10% with ethyl acetate and 0.1 part by weight of a solution prepared by diluting bis(trifluoromethanesulfonyl) imidolithium (manufactured by Tokyo Kasei Kogyo Co., Ltd.) to 10% with ethyl acetate were used as the organopolysiloxane having a polyoxyalkylene chain in a main chain in place of the main chain type A, an acryl-based pressure-sensitive adhesive solution (23) was prepared.

### [Preparation of Pressure-sensitive Adhesive Sheet]

In the same manner as in Example III-1, except that the acryl-based pressure-sensitive adhesive solution (23) was used, a pressure-sensitive adhesive sheet was prepared.

### <Example III-3>

### [Preparation of Pressure-Sensitive Adhesive Solution]

In the same manner as in Example III-1, except that 0.8 part by weight of a solution prepared by diluting a main chain type B (KF6004, manufactured by Shin-Etsu Chemical Co., Ltd.: polyoxyalkylene chain-terminated alkoxy group) to 10% with ethyl acetate and 0.1 part by weight of a solution prepared by diluting bis(trifluoromethanesulfonyl) imidolithium (manufactured by Tokyo Kasei Kogyo Co., Ltd.) to 10% with ethyl acetate were used as the organopolysiloxane having a polyoxyalkylene chain in a main chain in place of the main chain type A, an acryl-based pressure-sensitive adhesive solution (24) was prepared.

### [Preparation of Pressure-sensitive Adhesive Sheet]

In the same manner as in Example III-1, except that the acryl-based pressure-sensitive adhesive solution (24) was used, a pressure-sensitive adhesive sheet was prepared.

### <Example III-4>

### [Preparation of Pressure-Sensitive Adhesive Solution]

In the same manner as in Example III-1, except that 0.8 part by weight of a solution prepared by diluting a main chain type B (KF6004, manufactured by Shin-Etsu Chemical Co., Ltd.: polyoxyalkylene chain-terminated alkoxy group) to 10% with ethyl acetate and 0.2 part by weight of a solution prepared by diluting bis(trifluoromethanesulfonyl) imidolithium (manufactured by Tokyo Kasei Kogyo Co., Ltd.) to 10% with ethyl acetate were used as the organopolysiloxane having a polyoxyalkylene chain in a main chain in place of the main chain type A, an acryl-based pressure-sensitive adhesive solution (25) was prepared.

### [Preparation of Pressure-sensitive Adhesive Sheet]

In the same manner as in Example III-1, except that the acryl-based pressure-sensitive adhesive solution (25) was used, a pressure-sensitive adhesive sheet was prepared.

### <Example III-5>

### [Preparation of Pressure-Sensitive Adhesive Solution]

In the same manner as in Example III-1, except that 0.4 part by weight of a solution prepared by diluting a main chain type B (KF6004, manufactured by Shin-Etsu Chemical Co., Ltd.: polyoxyalkylene chain-terminated alkoxy group) to 10% with ethyl acetate was used as the organopolysiloxane having a polyoxyalkylene chain in a main chain in place of the main chain type A, and 0.2 part by weight of a solution prepared by diluting the above ionic liquid (1) to 10% with ethyl acetate was used in place of bis(trifluoromethanesulfonyl) imidolithium as an alkali metal salt, an acryl-based pressure-sensitive adhesive solution (26) was prepared.

### [Preparation of Pressure-sensitive Adhesive Sheet]

In the same manner as in Example III-1, except that the acryl-based pressure-sensitive adhesive solution (26) was used, a pressure-sensitive adhesive sheet was prepared.

### <Example III-6>

### [Preparation of Pressure-Sensitive Adhesive Solution]

In the same manner as in Example III-2, except that 0.02 part by weight of a polyoxyalkylene chain-containing compound containing no organopolysiloxane (ADEKA Pluronic 17R-4, manufactured by Asahi Denka Co., Ltd.) was further used, an acryl-based pressure-sensitive adhesive solution (27) was prepared.

### [Preparation of Pressure-sensitive Adhesive Sheet]

In the same manner as in Example III-1, except that the acryl-based pressure-sensitive adhesive solution (27) was used, a pressure-sensitive adhesive sheet was prepared.

### <Comparative Example III-1>

### [Preparation of Pressure-Sensitive Adhesive Solution]

In the same manner as in Example III-1, except that an organopolysiloxane side chain type C having a polyoxyalkylene chain in a side chain (KF354L, manufactured by Shin-Etsu Chemical Co., Ltd.) was used in place of the organopolysiloxane main chain type A having a polyoxyalkylene chain in a main chain, an acryl-based pressure-sensitive adhesive solution (28) was prepared.

### [Preparation of Pressure-sensitive Adhesive Sheet]

In the same manner as in Example III-1, except that the acryl-based pressure-sensitive adhesive solution (28) was used, a pressure-sensitive adhesive sheet was prepared.

### <Comparative Example III-2>

### [Preparation of Pressure-Sensitive Adhesive Solution]

In the same manner as in Example III-1, except that an organopolysiloxane side chain type D having a polyoxyalkylene chain in a side chain (KF353, manufactured by Shin-Etsu Chemical Co., Ltd.) was used in place of the organopolysiloxane main chain type A having a polyoxyalkylene chain in a main chain, an acryl-based pressure-sensitive adhesive solution (29) was prepared.

### [Preparation of Pressure-sensitive Adhesive Sheet]

In the same manner as in Example III-1, except that the acryl-based pressure-sensitive adhesive solution (29) was used, a pressure-sensitive adhesive sheet was prepared.

### < Example III-7>

### [Preparation of Pressure-Sensitive Adhesive Solution]

In the same manner as in Example III-2, except that 0.46 part by weight of an isocyanurate of hexamethylene diisocyanate which contains isocyanate having no aromatic ring (COLONATE HX manufactured by Nippon Polyurethane Industry Co., Ltd., 100% by weight) as a crosslinking agent, an acryl-based pressure-sensitive adhesive solution (30) was prepared.

### [Preparation of Pressure-sensitive Adhesive Sheet]

In the same manner as in Example III-1, except that the acryl-based pressure-sensitive adhesive solution (30) was used, a pressure-sensitive adhesive sheet was prepared.

### <Comparative Example III-3>

### [Preparation of Pressure-Sensitive Adhesive Solution]

In the same manner as in Example III-1, except that the organopolysiloxane having a polyoxyalkylene chain was not used, an acryl-based pressure-sensitive adhesive solution (31) was prepared.

### [Preparation of Pressure-sensitive Adhesive Sheet]

In the same manner as in Example III-1, except that the acryl-based pressure-sensitive adhesive solution (31) was used, a pressure-sensitive adhesive sheet was prepared.

### <Comparative Example III-4>

### [Preparation of Pressure-Sensitive Adhesive Solution]

In the same manner as in Example 111-5, except that the organopolysiloxane having a polyoxyalkylene chain was not used, an acryl-based pressure-sensitive adhesive solution (32) was prepared.

### [Preparation of Pressure-sensitive Adhesive Sheet]

In the same manner as in Example III-1, except that the acryl-based pressure-sensitive adhesive solution (32) was used, a pressure-sensitive adhesive sheet was prepared.

### <Example III-8>

### [Preparation of Pressure-Sensitive Adhesive Solution]

In the same manner as in Example III-1, except that bis(trifluoromethanesulfonyl) imidolithium (manufactured by Tokyo Kasei Kogyo Co., Ltd.) was not used, an acryl-based pressure-sensitive adhesive solution (33) was prepared.

### [Preparation of Pressure-sensitive Adhesive Sheet]

In the same manner as in Example III-1, except that the acryl-based pressure-sensitive adhesive solution (33) was used, a pressure-sensitive adhesive sheet was prepared.

### <Example III-9>

### [Preparation of Pressure-Sensitive Adhesive Solution]

In the same manner as in Example III-2, except that 0.1 part by weight of the above oxyalkylene chain-containing (meth)acryl-based polymer (B) containing no organopolysiloxane was further used, an acryl-based pressure-sensitive adhesive solution (34) was prepared.

### [Preparation of Pressure-sensitive Adhesive Sheet]

In the same manner as in Example III-1, except that the acryl-based pressure-sensitive adhesive solution (34) was used, a pressure-sensitive adhesive sheet was prepared.

According to the above methods, the prepared pressure-sensitive adhesive sheets were measured for peeling electrification voltage, low-speed adhesive power (peeling rate: 0.3 m/minute) and high-speed adhesive power (peeling rate: 30 m/minute), and evaluated for staining properties. The obtained results are shown in Table 3.

**[Table 3]**

| Formulation and evaluation results | Composition of pressure-sensitive adhesive | | | | Peeling electrification voltage (kV: absolute value) | Low -speed adhesive power <0.3 m/ minute> [N/25 mm] | High -speed adhesive power <30 m/ minute> [N/25 mm] | Staining properties [-] | Separator peel adhesive power temporal stability [-] |
|---|---|---|---|---|---|---|---|---|---|
| | Organopolysiloxane | Isocyanate compound having aromatic ring | Polyoxyalkyle ne chain-containing compound | Ionic compound | | | | | |
| Example III-1 | Main chain type A | Included | - | Alkali metal salt | 0.0 | 0.06 | 0.70 | O | O |
| Example III-2 | Main chain type B | Included | - | Alkali metal salt | 0.0 | 0.09 | 1.25 | O | OO |
| Example III-3 | Main chain type B | Included | - | Alkali metal salt | 0.0 | 0.09 | 1.03 | O | OO |
| Example III-4 | Main chain type B | Included | - | Alkali metal salt | 0.0 | 0.07 | 0.83 | O | OO |
| Example III-5 | Main chain type B | Included | - | Ionic liquid | 0.0 | 0.06 | 0.56 | O | OO |
| Example III-6 | Main chain type B | Included | ADEKA Pluronic 17R-4 | Alkali metal salt | 0.0 | 0.05 | 0.60 | O | OO |
| Example III-7 | Main chain type B | Not included | - | Alkali metal salt | 0.2 | 0.02 | 0.24 | O | OO |
| Example 111-8 | Main chain type A | Included | - | - | 1.4 | 0.07 | 0.71 | O | O |
| Example III-9 | Main chain type B | Included | Acryl-based polymer B | Alkali metal salt | 0.0 | 0.06 | 0.73 | O | OO |
| Comparative Example III-1 | Side chain type C | Included | - | Alkali metal salt | 0.0 | 0.09 | 1.75 | O | OO |
| Comparative Example III-2 | Side chain type D | Included | - | Alkali metal salt | 0.4 | 0.20 | 4.35 | O | OO |
| Comparative Example III-3 | - | Included | - | Alkali metal salt | 0.2 | 0.17 | 2.95 | × | OO |
| Comparative Example III-4 | - | Included | - | Ionic liquid | 0.4 | 0.16 | 2.80 | × | OO |

The results in Table 3 revealed that when a pressure-sensitive adhesive composition containing an organopolysiloxane having an oxyalkylene chain in a siloxane moiety as a main chain (specific organopolysiloxane) and an ionic compound, crosslinked with an isocyanate compound having an aromatic ring, was used in Examples III-1 to III-6 and 111-9, the absolute value of a peeling electrification voltage was suppressed to a low value of 0.5 kV or less and also the adhesive powers at low-speed peeling and high-speed peeling can be adjusted within a desired range, and thus reconciling antistatic properties and removability. It could be also confirmed that they have low staining properties. Since an isocyanate compound having an aromatic ring was not used in Example 111-7, the adhesive power at low-speed peeling decreased but other characteristics were satisfactory. Since a specific organosiloxane was used but an ionic compound was not used in Example 111-8, the peeling electrification voltage increased but other characteristics were also satisfactory.

In contrast, it became apparent that since an organopolysiloxane having an oxyalkylene chain in a side chain in place of a main chain was used in Comparative Examples III-1 and III-2, the adhesive power at high-speed peeling increased, resulting in inferior removability. It became apparent that since an organosiloxane per se was not used in Comparative Examples III-3 and III-4, the adhesive power at high-speed peeling increased, resulting in inferior removability.

### EXPLANATION OF THE REFERENCE NUMERALS

1 Potential meter
2 Pressure-sensitive adhesive sheet
3 Polarizing plate
4 Acrylic plate
5 Sample mount
The present invention provides a pressure-sensitive adhesive composition which is excellent in removability, peel adhesive power temporal stability and staining properties; a pressure-sensitive adhesive layer produced with the same; and a pressure-sensitive adhesive sheet. The present invention also provides a pressure-sensitive adhesive composition which can prevent electrification of a non-antistatic protected adherend when peeled off using an ionic compound which is an antistatic agent, and is less likely to cause lifting and is also excellent in removability; a pressure-sensitive adhesive layer produced with the same; and a pressure-sensitive adhesive sheet.A pressure-sensitive composition comprising a (meth)acryl-based polymer containing, as a main component, a (meth)acryl-based monomer having an alkyl group of 1 to 14 carbon atoms and an organopolysiloxane having a oxyalkylene chain, wherein the organopolysiloxane is represented by the following formula: 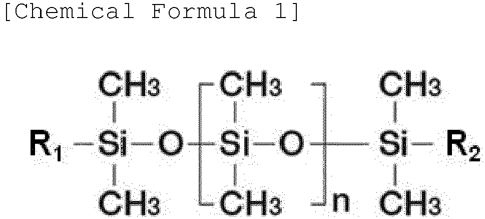 wherein R₁ and/or R₂ have/has an oxyalkylene chain of 1 to 6 carbon atoms, an alkylene group in the oxyalkylene chain may be a straight or branched chain and the oxyalkylene chain may have an alkoxy group or a hydroxyl group at the end, and any one of R₁ or R₂ may be a hydroxyl group or an alkyl group or an alkoxy group, and a part of the alkyl group and alkoxy group may be a functional group substituted with a hetero atom; and n is an integer of 1 to 300.

## Claims

1. A pressure-sensitive composition comprising a (meth)acryl-based polymer containing, as a main component, a (meth)acryl-based monomer having an alkyl group of 1 to 14 carbon atoms and an organopolysiloxane having a oxyalkylene chain, wherein the organopolysiloxane is represented by the following formula: 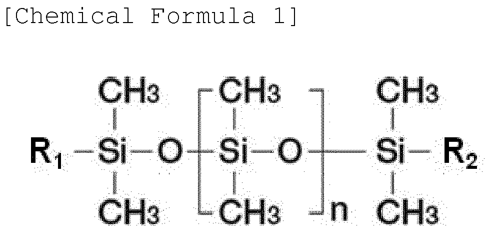 wherein R₁ and/or R₂ have/has an oxyalkylene chain of 1 to 6 carbon atoms, an alkylene group in the oxyalkylene chain may be a straight or branched chain and the oxyalkylene chain may have an alkoxy group or a hydroxyl group at the end, and any one of R₁ or R₂ may be a hydroxyl group or an alkyl group or an alkoxy group, and a part of the alkyl group and alkoxy group may be a functional group substituted with a hetero atom; and n is an integer of 1 to 300.

2. The pressure-sensitive adhesive composition according to claim 1, which contains an ionic compound.

3. The pressure-sensitive adhesive composition according to claim 1 or 2, which contains an isocyanate compound having an aromatic ring.

4. The pressure-sensitive adhesive composition according to claim 2 or 3, wherein the ionic compound is a lithium salt.

5. The pressure-sensitive adhesive composition according to claim 2 or 3, wherein the ionic compound is an ionic liquid.

6. The pressure-sensitive adhesive composition according to any one of claims 1 to 5, wherein the (meth)acryl-based polymer further contains, as a monomer component, a hydroxyl group-containing (meth)acryl-based monomer.

7. The pressure-sensitive adhesive composition according to any one of claims 1 to 6, which further contains a polyoxyalkylene chain-containing compound containing no organopolysiloxane.

8. A pressure-sensitive adhesive sheet comprising a supporting film, and a pressure-sensitive adhesive formed of the pressure-sensitive adhesive composition according to any one of claims 1 to 7 formed on one or both sides of the supporting film.

9. The pressure-sensitive adhesive sheet according to claim 8, which is used for surface protection.
